# EUROPEAN PATENT SPECIFICATION

(11) **EP 1 502 825 B1**
(45) Date of publication and mention of the grant of the patent: **29.08.2007**
(21) Application number: 04015667.1
(22) Date of filing: 02.07.2004
(51) Int. Cl.: B60R 21/16

(54) **Automotive vehicle occupant protection system**
Fahrzeuginsassen-Schützsystem
Système de protection d'un occupant d'un véhicule automobile

(30) Priority: 31.07.2003 JP 2003204682; 30.09.2003 JP 2003340823; 21.04.2004 JP 2004125682
(43) Date of publication of application: 02.02.2005
(73) Proprietor: TAKATA CORPORATION, Minato-ku, Tokyo 106-8510 (JP)
(72) Inventor: Higuchi, Masahiro, Tokyo 106-8510 (JP)
(74) Representative: Banzer, Hans-Jörg

(56) References cited:
- EP-A- 1 279 568
- GB-A- 1 370 575

## Description

### [Technical Field]

The present invention relates to an occupant protection system for protecting an occupant of a car etc. in the event of a front crash and, more specifically, it relates to an occupant protection system including a deployable body that deploys vertically and horizontally in a vehicle cabin.

### [Background Art]

Airbag systems are widely used as occupant protection systems for protecting vehicle occupants in the event of a car crash. It is described in Japanese Unexamined Patent Application Publication No. 10-264761 to provide an airbag system that inflates an airbag from the ceiling of the cabin downward toward the front of the rear seat.

### [Disclosure of the Invention]

### [Problems to be Solved by the Invention]

The rear-seat airbag system disclosed in the Japanese Unexamined Patent Application Publication No. 10-264761 which protects occupants with an airbag will sufficiently protect the occupants by using a large-capacity air bag which will fill the space ahead of the seated occupants. For that purpose, however, it requires extremely high-output gas generator.

The rear-seat airbag system of Japanese Unexamined Patent Application Publication No. 10-264761 requires space sufficient for the airbag to inflate in front of the occupants. It is therefore difficult to apply it to a case in which the space ahead of the occupants is narrow.

From GB 1 370 570 A an occupant protection system according to the preamble of claim 1 is known.

EP 1 279 568 A discloses an airbag which is deployable from a cabin sealing downward. In the airbag of this document, side straps are provided which are secured to a lateral side part of the airbag and extend to an anchor point of the roof of the vehicle located above and to the rear of an occupant of the vehicle. These straps serve to hold the airbag in place. Furthermore, from this document an U-shaped inflatable element is known which is connected with a main inflatable part at a lower part thereof for transferring gas to the main inflatable part, wherein at first only the inflatable element is inflated.

Accordingly, the object of the present invention is to provide an occupant protection system that inflates sufficiently early even with a relatively low-output gas generator and that is capable of sufficiently protecting occupants. Another object of the invention is to provide an occupant protection system that is applicable even if the space ahead of the occupants is narrow.

### [Means for Solving the Problems]

This object is achieved by an occupant protection system as defined by claim 1. The dependent claims define preferred or advantageous embodiments of the present invention.

An occupant protection system according to the present invention is characterized by including a deployable body capable of deploying from above downward in a vehicle cabin into a vertically and laterally deployed state; a bag provided to the deployable body and capable of inflating to receive an occupant; and a gas generator for inflating the bag, wherein the bag inflates to a specified size or more after the deployable body deploys downward by a specified length or more.

The occupant protection system also includes a deploying inflatable chamber for deploying the deployable body by inflation, wherein the bag is inflated after the deploying inflatable chamber has inflated.

The gas generator is provided to supply the deploying inflatable chamber with gas; and the occupant protection system further includes gas communicating means for introducing the gas in the deploying inflatable chamber into the bag.

The gas communicating means include valve means that is opened to introduce the gas from the deploying inflatable chamber into the bag when the gas pressure in the deploying inflatable chamber exceeds a specified value.

The lower part of the deploying inflatable chamber and the lower part of the bag may communicate with each other in the lower part of the deploying inflatable chamber.

The occupant protection system may further include inflation-thickness limitation means for limiting the inflation thickness of the bag.

The deployable body may deploy with the inflation of the bag; and the system may further include inflation-thickness limitation means that limits the inflation thickness of the bag until the gas pressure in the bag reaches a specified value and removes the limitation when the gas pressure has reached the specified value.

The deployable body may deploy from the cabin ceiling downward.

In this case, the occupant protection system may further include joints for joining the left and right sides of the deployed deployable body with the left and right side rims of the ceiling which extend to portions closer to the rear of the vehicle relative to the deployable body or the portions connecting thereto, respectively.

Also, the occupant protection system may further include retaining means for retaining the upper part of the inflated bag adjacent to the occupant to the cabin ceiling.

The retaining means may include a guide member extending in the direction of inflation of the bag and a movable body capable of moving along the guide member, wherein the upper part of the bag adjacent to the occupant is connected to the movable body.

The guide member and the movable body may comprise one-way means that allows the movable body to move in the direction of inflation of the bag and prevents movement in the opposite direction.

The one-way means may allow the movable body to move in the opposite direction when specified power or more is applied in the opposite direction.

The occupant protection system may further include a vent hole for discharging gas from the bag.

### [Advantages]

The occupant protection system of the present invention can protect occupants by receiving the occupants with the deployable body having a bag. Since the bag receives the occupants, the reaction force during reception can be decreased. According to the invention, the bag inflates after the deployable body has deployed downward by a specified length or more. Therefore, even if the space ahead of the occupant is narrow, the deployable body enters the space from above and then the bag inflates to reliably receive the occupant from front.

The system may further include deploying means for deploying the deployable body, wherein after a specified time has elapsed since the deploying means starts operation, the gas generator is actuated. With such a structure, the bag can be inflated to a specified size or more after the deploying means inflates downward by a specified length or more.

The system may further include a deploying inflatable chamber for deploying the deployable body by inflation, wherein the bag is inflated after the deploying inflatable chamber has inflated. The occupant protection system with such a structure can have a simpler deployment mechanism than that which deploys the deployable body with a drawing mechanism. Since the gas emitted from the gas generator is introduced into the bag from the deploying inflation chamber through the gas communicating means, the deploying inflation chamber and the bag can be inflated with a common gas generator.

In that case, the gas communicating means may include valve means that is opened to introduce the gas from the deploying inflatable chamber into the bag when the gas pressure in the deploying inflatable chamber exceeds a specified level. The lower part of the deploying inflatable chamber and the lower part of the bag may communicate with each other in the lower part of the deploying inflatable chamber. This allows the inflatable chamber to inflate fully, thereby reliably inflating the inflatable body downward to a specified length or more.

The system may further include inflation-thickness limitation means for limiting the inflation thickness of the bag. Accordingly, even if the space ahead of the occupant is narrow, the bag can surely enter the space to inflate therein. The limitation of the inflation thickness of the bag promotes the inflation of the bag. The limitation of the inflation thickness of the bag also hardens the inflated bag, allowing the bag to receive the occupant reliably.

In a preferred embodiment, the deployable body inflates with the inflation of the bag and the system further includes inflation-thickness limitation means that limits the inflation thickness of the bag until the gas pressure in the bag reaches a specified level and that removes the limitation when the gas pressure has reached the specified level.

With such a structure, the inflation thickness of the bag is limited until the gas pressure in the bag reaches a specified level. The bag therefore inflates with a small thickness to deploy the deployable body. Accordingly, even if the space ahead of the occupant is narrow, the deployable body surely enters the space from above. When the gas pressure in the bag reaches a specified level, the limitation of the inflation thickness of the bag is removed to increase the inflation thickness of the bag.

The deployable body of the invention deploys preferably from the cabin ceiling downward. With such a structure, the deployable body can surely be deployed in a wide range ahead of the upper body of the seated occupant.

In that case, the system may further includes joints for joining the left and right sides of the deployed deployable body with the left and right side rims of the ceiling which extend closer to the rear of the vehicle relative to the deployable body or the portions connecting thereto, respectively. With such a structure, when an occupant strikes against the deployable body, the deployable body can reliably receive the occupant without retracting toward the front of the vehicle since the left and right sides of the deployable body are joined with the left and right side rims of the ceiling which extend closer to the rear of the vehicle relative to the deployable body or portions connecting thereto (for example, to the vicinity, specifically, the upper part of a pillar such as a C-pillar).

The invention preferably includes retaining means for retaining the upper part of the inflated bag adjacent to the occupant to the cabin ceiling when the deployable body is constructed to deploy from the cabin ceiling downward. Such a structure prevents the bag from retracting from the occupant when the occupant strikes against the deployable body.

The retaining means may include a guide member extending in the direction of inflation of the bag and a movable body capable of moving along the guide member, wherein the upper part of the bag adjacent to the occupant is connected to the movable body. With such a structure, when the bag inflates, the movable body also moves along the guide member with the inflation of the bag. Since the guide member extends in the direction of the inflation of the bag, the bag is guided by the guide member through the movable body to reliably inflate toward the occupant. The inflated bag is retained to the cabin ceiling through the movable body and the guide member.

According to the invention, preferably, the guide member and the movable body include one-way means that allows the movable body to move in the direction of inflation of the bag and prevents movement in the opposite direction. Accordingly, after the bag inflates toward the occupant by the guide of the guide member, the movement in the opposite direction is prevented. This surely prevents the bag from retracting from the occupant when the occupant strikes against the inflated bag.

When the one-way means is constructed to allow the movable body to move (retract) in the opposite direction from the inflation of the bag when specified power or more is applied in the opposite direction, when the occupant strikes against the inflated bag, the impact to the occupant can be prevented by the retraction of the movable body with the load from the occupant.

The invention may be constructed such that the upper part of the bag adjacent to the occupant is retained directly to the cabin ceiling without the guide member and the movable body. This structure simplifies the structure of retaining the bag to the cabin ceiling.

The invention preferably includes a vent hole for discharging gas from the bag. Providing the vent hole allows the gas to flow out from the bag through the vent hole, thereby absorbing the impact applied to the occupant when the inflated bag receives the occupant.

### [Brief Description of the Drawings]

Fig. 1 includes perspective views of an occupant protection system, with the deployable body in a nondeployed state and in a deployed state, which is not an embodiment of the present invention.
Fig. 2 includes schematic side views of the interior of a vehicle including the occupant protection system.
Fig. 3 is a perspective view of an occupant protection system, with the bag in an inflated state, which is not an embodiment.
Fig. 4 is a cross-sectional view taken along line IV-IV of Fig. 3.
Fig. 5 is a cross-sectional view taken along line V-V of Fig. 3.
Fig. 6 is a perspective view of an occupant protection system, with the bag in a noninflated state, which is not an embodiment.
Fig. 7 is a perspective view of the occupant protection system of Fig. 6 with the bag in an inflated state.
Fig. 8 includes structural diagrams of an occupant protection system according to an embodiment.
Fig. 9 includes structural diagrams of an occupant protection system according to another embodiment.
Fig. 10 is a perspective view of an occupant protection system, with the bag in an inflated state, which is not an embodiment.
Fig. 11 is a cross-sectional view taken along line XI-XI of Fig. 10.
Fig. 12 is a perspective view of an occupant protection system, with the bag in an inflated state, according to another embodiment.
Fig. 13 includes cross-sectional views of the occupant protection system of Fig. 12 with the bag in a noninflated state and in an inflated state.
Fig. 14 is a perspective view of an occupant protection system, with the bag in an inflated state, which is not an embodiment.
Fig. 15 is a perspective view of an occupant protection system, with the bag in an inflated state, which is not an embodiment.
Fig. 16 is a cross-sectional view taken along line XVI-XVI of Fig. 15.
Fig. 17 is a cross-sectional view of an occupant protection system which is not an embodiment, viewed from the side.
Fig. 18 is a perspective view of an occupant protection system, with the deployable body in an inflated state, which is not an embodiment.
Fig. 19 includes cross-sectional views of the deployable body of the occupant protection system of Fig. 18.
Fig. 20 is a longitudinal sectional view of an occupant protection system which is not an embodiment.

### [Best Mode for Carrying Out the Invention]

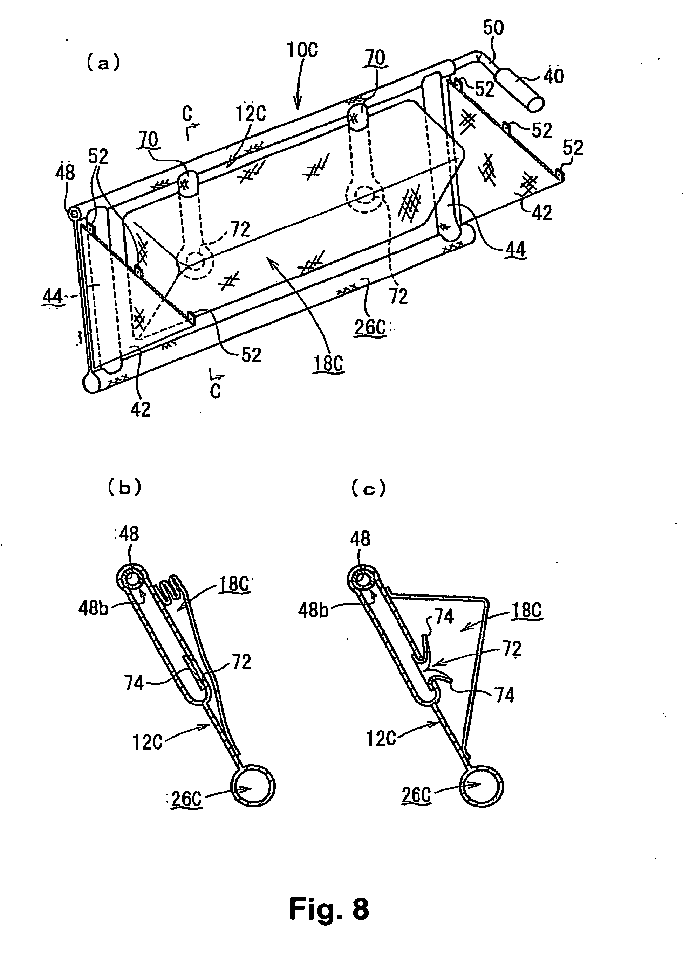

Embodiments of the present invention will be described hereinafter with reference to the drawings, wherein only Figs. 8, 9, 12 and 13 relate to embodiments.

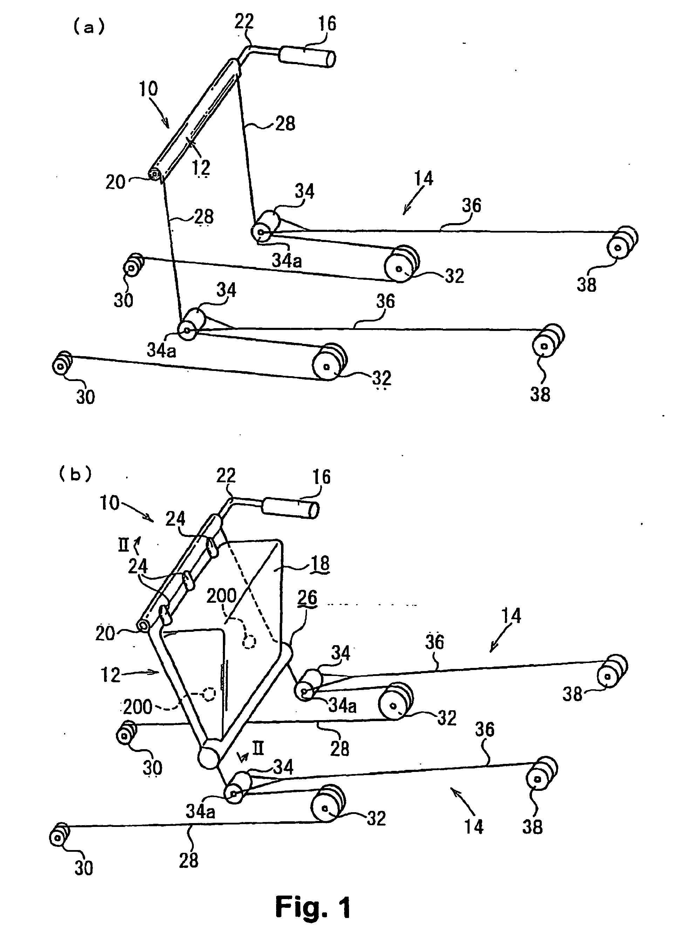

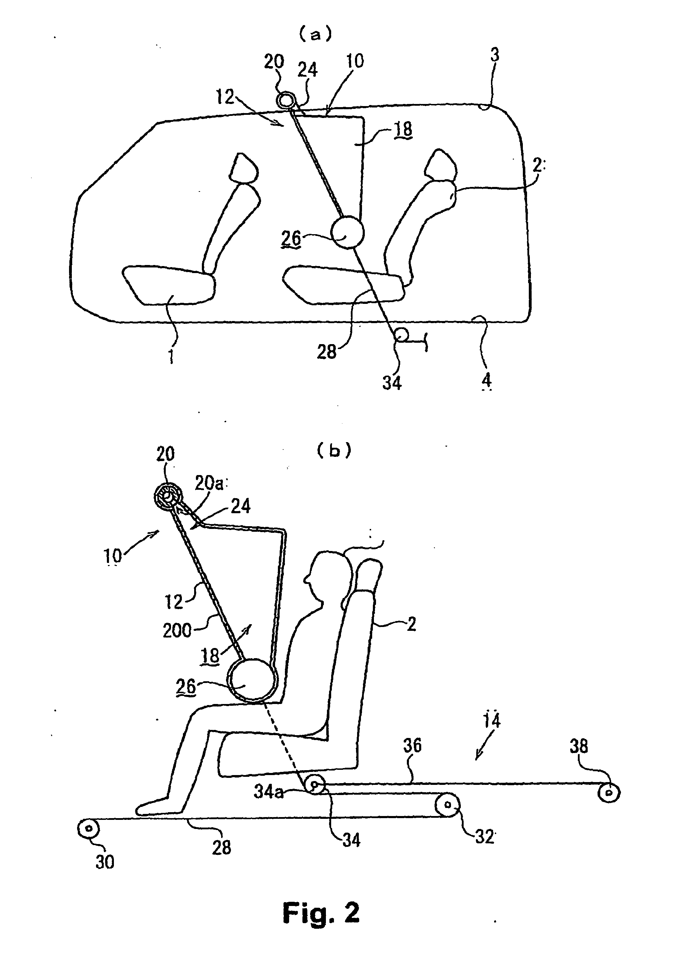

Fig. 1(a) is a perspective view of an occupant protection system 10, with the deployable body in a nondeployed state. Fig. 1(b) is a perspective view of the deployable body 12 of the occupant protection system 10 in a deployed state. Fig. 2(a) is a schematic side view of the interior of a vehicle including the occupant protection system 10. Fig. 2(b) is an enlarged view of Fig. 2(a).

As shown in Fig. 2(a), a front seat 1 and a rear seat 2 are installed in the vehicle cabin.

A deployable body 12, in a wound state, of the occupant protection system 10 is mounted between the upper ends of left and right pillars (not shown) of a ceiling 3. The deployable body 12 can be deployed from the ceiling 3 downward such that it is deployed vertically and horizontally in the vehicle cabin, in front of the upper body of an occupant seated in the rear seat 2.

The occupant protection system 10 includes the deployable body 12, a draw gear 14 for inflating the deployable body 12, a gas generator 16, and a controller (not shown) for controlling the operation of the draw gear 14 and the gas generator 16. The deployable body 12 includes a bag 18 which inflates with the gas supplied from the gas generator 16 to receive the occupant. The bag 18 inflates so as to protrude from the front surface (the side adjacent to the occupant) of the deployable body 12 toward the occupant seated in the rear seat 2 (the rear of the vehicle) in the region of the deployable body 12 which faces the upper body of the occupant.

As shown in Figs. 1(b), 2(a), and 2(b), the deployable body 12 is shaped like an approximately rectangular sheet with a small thickness, of which the upper rim is joined with a take-up shaft 20. The take-up shaft 20 extends in the direction of the width of the vehicle (laterally) along the ceiling 3. The ceiling 3 mounts a cover (not shown) for covering the wound deployable body 12. The cover is constructed to tear open at the deployment of the deployable body 12 to allow the deployment of the deployable body 12 downward relative to the deployable body 12 (into the vehicle cabin).

The take-up shaft 20 is shaped like a hollow tube, to one end of which the gas generator 16 is connected through a hollow rotatable joint (not shown) and a duct (pipe) 22. The duct 22 and the gas generator 16 are disposed along the side rim of the ceiling 3. Gas passages 24 extend between the take-up shaft 20 and the bag 18, for leading the gas supplied from the gas generator 16 into the take-up shaft 20 into the bag 18. As shown in Fig. 2(b), the take-up shaft 20 has a vent hole 20a that opens into the gas passage 24.

This system includes an oblong bag 26 extending in the direction of the vehicle width along the lower rim of the deployable body 12. The lower part of the bag 18 connects to the oblong bag 26.

This system has vent holes 200 for discharging the gas in the inflated bag 18 to the exterior.

It is desirable that the vent holes 200 be disposed in positions where they are not closed by the backrest or the headrest of the front seat 1, the body of the occupant in the rear seat 2 who falls onto the bag 18, etc. and the gas flowing out of the vent holes 200 is not blown onto not only the occupant in the rear seat 2 but also the occupant in the front seat 1.

In this system, the front seat 1 is constructed of two seats arranged laterally apart from each other.

Accordingly, as shown in Figs. 1(b) and 2(b), this system has the vent holes 200 in the lower center of each of the left and right half of the deployable body 12, which is opposite to the surface of the bag 18 facing the rear-seat occupant, in other words, in the position facing the lower center of the back of the backrest of each seat of the front seat 1, with the deployable body 12 fully deployed.

With such arrangement of the vent holes 200, the gas flowing out from the vent holes 200 blows onto the lower center of the back of the backrest of each seat of the front seat 1 to thereby prevent the gas from blowing not only onto the rear-seat occupant but also onto the front-seat occupant.

The backrest of each seat of the front seat 1 is closer to the rear of the vehicle at the upper part (closer to headrest). In other words, at the lower part the backrest is apart from the deployed deployable body 12. This prevents the vent holes 200 from being closed with the backrest or the head rest. Since the vent holes 200 are provided in the deployable body 12 opposite to the side of the bag 18 facing the rear-seat occupant, the vent holes 200 are prevented from being closed with the body of the rear-seat occupant who falls onto the bag 18.

The vent holes 200 may connect the inside and outside of the bag 18 all the time or, alternatively, may be closed until the inner pressure of the bag 18 exceeds a specified level.

The draw gear 14 is constructed to draw down the opposite ends of the lower rim of the deployable body 12.

The draw gear 14 includes a first wire 28, one end of which is connected to each of the left and right lower ends of the deployable body 12, a first reel 30 for winding the other end of the first wire 28, a fixed pulley 32 over which the intermediate part of the first wire 28 is looped, a moving pulley 34 over which the intermediate part of the first wire 28 which is closer to the deployable body 12 relative to the fixed pulley 32 is looped, a second wire 36, one end of which is connected to the rotating shaft 34a of the moving pulley 34, and a second reel 38 for winding the other end of the second wire 36. The first reel 30, the fixed pulley 32, the moving pulley 34, and the second reel 38 are disposed on each of the left and right sides of the floor 4 of the vehicle cabin.

When the deployable body 12 is in a nondeployed state, the moving pulley 34 is disposed in the vicinity of the base of a B-pillar. The moving pulley 34 is biased toward the front of the vehicle by a spring (not shown). The moving pulley 34 is guided by a guide member (not shown) to be able to move from the base of the B-pillar to the rear of the vehicle.

As shown in Fig. 2(b), the fixed pulley 32 is placed closer to the rear side of the vehicle than the moving pulley 34. The first reel 30 is placed closer to the front of the vehicle relative to the fixed pulley 32. The second reel 38 is placed closer to the rear of the vehicle relative to the moving pulley 34.

As shown in Fig. 1(a), when the deployable body 12 is in a nondeployed state, the first wire 28 extends along the B-pillar and is covered with a cover (not shown) mounted to the B-pillar. The part of the first wire 28 which extends along the floor 4 is also covered with a cover (not shown). The covers each have a torn-open portion that is torn open when the first wire 28 is drawn toward the rear of the vehicle to allow the first wire 28 to move toward the rear of the vehicle.

The reels 30 and 38 each connect to a rotation driving unit (not shown). Since the rotation driving unit is driven by explosive, a motor, etc., the reels 30 and 38 can wind the wires 28 and 36 quickly, respectively.

Each draw gear 14 includes a sensor for sensing the length of the first wire 28 wound by the first reel 30. The sensor may have any structure. For example, it may include a counter for counting the number of rotations of the first reel 30 to calculate the wound length of the first wire 28 from the count of the counter after the rotation driving unit of the first reel 30 has started operation.

When a crash sensor (not shown) has detected a car crash, the controller immediately activates the rotation driving units of the reels 30 and 38 of the draw gear 14, and, when the crash sensor has detected that the length of the first wire 28 wound by the first reel 30 has reached a specified value, then the controller activates the gas generator 16 to emit a jet of gas.

When a vehicle including the occupant protection system 10 with such a structure has a crash, the controller first activates the rotation driving units of the reels 30 and 38 of the draw gear 14, so that the reels 30 and 38 quickly wind the first wire 28 and the second wire 36, respectively. The deployable body 12 is thereby pulled by the first wire 28 to be quickly drawn out of the ceiling 3 downward. At that time, as the moving pulley 34 is pulled by the second wire 36 to move toward the rear of the vehicle, the deployable body 12 is pulled also toward the rear of the vehicle to deploy diagonally backward, as shown in Figs. 1(b), and Figs. 2(a) and 2(b). The lower rim of the deployed deployable body 12 faces the waist of the occupant seated in the rear seat 2. The deployed deployable body 12 is given a tension sufficient to receive the occupant through the first wire 28.

When the length of the first wire 28 wound by the first reel 30 has reached a specified value as the deployable body 12 is pulled by the first wire 28 to deploy downward, the controller activates the gas generator 16 to emit a jet of gas. The gas emitted from the gas generator 16 inflates the bags 18 and 26. As shown in Fig. 2(b), the oblong bag 26 provided along the lower rim of the deployable body 12 restrains the waist of the occupant to the rear seat 2 to prevent the forward movement of the occupant. When the occupant falls onto the deployable body 12, the inflated bag 18 receives the occupant like a cushion. At that time, since the gas in the bag 18 flows out of the vent holes 200, the impact to the occupant is absorbed.

In the occupant protection system 10, after the length of the first wire 28 wound by the first reel 30, which draws the deployable body 12 downward, has reached a specified value, briefly, after the deployable body 12 has deployed downward by a specified length or more, the gas generator 16 operates to inflate the bags 18 and 26. Therefore, even if the space between the occupant seated in the rear seat 2 and the front seat 1 ahead of the rear seat 2 is small, the deployable body 12 enters the space from above and the bags 18 and 26 thereafter inflate to reliably receive the occupant from front.

In this system, since the deployable body 12 deploys from the cabin ceiling 3 downward, the deployable body 12 can surely be deployed into a wide range ahead of the upper body of the occupant seated in the rear seat 2.

In the occupant protection system 10, since the bag 18 inflates so as to protrude from the front surface of the deployable body 12 toward the occupant in the rear seat 2 and the oblong bag 26 is provided only along the lower rim of the deployable body 12, the volume of the bags 18 and 26 is smaller than that of an airbag that completely fills the space ahead of the occupant in the rear seat 2 and as such, the bags 18 and 26 can be inflated sufficiently early even with a relatively low-output gas generator.

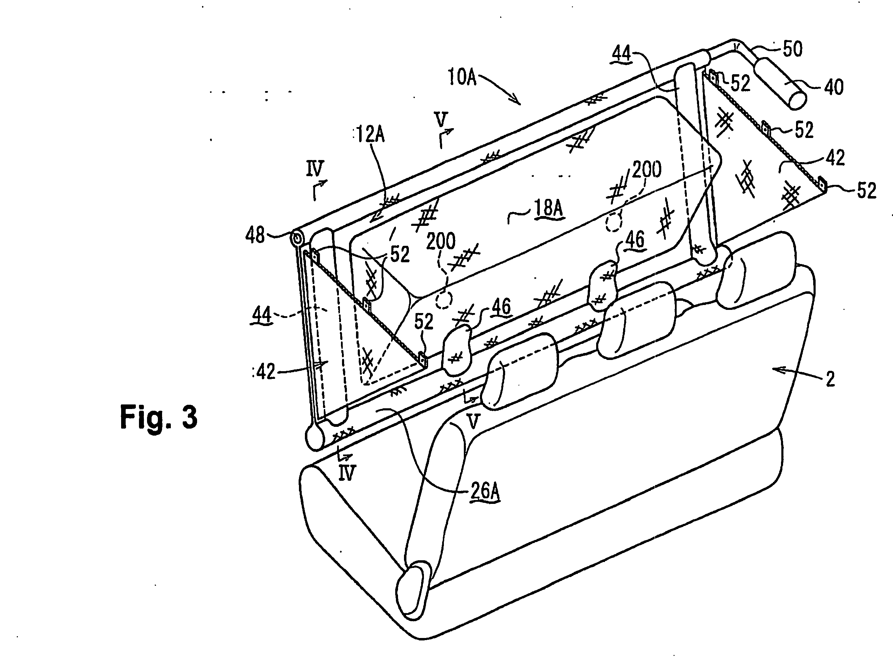

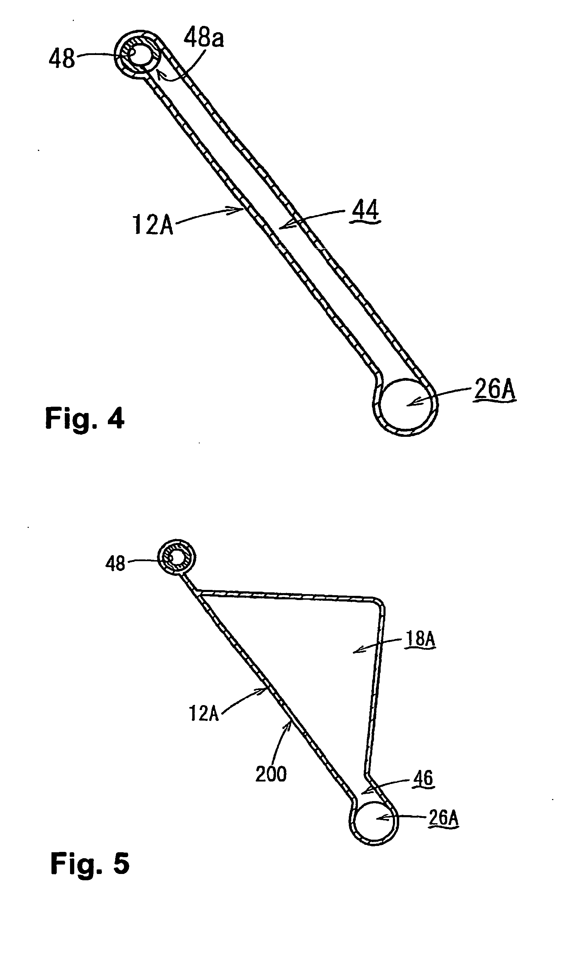

Fig. 3 is a perspective view of a further occupant protection system 10A, with the deployable body in a deployed state. Fig. 4 is a cross-sectional view taken along line IV-IV of Fig. 3. Fig. 5 is a cross-sectional view taken along line V-V of Fig. 3.

Also in this case, the occupant protection system 10A is mounted to the ceiling 3 (not shown in Figs. 3 to 5) between the front seat 1 (not shown in Figs. 3 to 5) and the rear seat 2.

The occupant protection system 10A includes a deployable body 12A which can deploy from the ceiling 3 downward such that it deploys vertically and laterally in the vehicle cabin in the region ahead of the upper body of an occupant seated in the rear seat 2, a gas generator 40, and two joints 42 that connect the left and right sides of the deployable body 12A with the left and right side rims of the ceiling 3 which are closer to the rear of the vehicle relative to the deployable body 12A, respectively. The deployable body 12A mounts a bag 18A which inflates with the gas supplied from the gas generator 40 to receive an occupant. Also the bag 18A inflates so as to protrude from the front surface of the deployable body 12A toward the occupant seated in the rear seat 2 in the region of the deployable body 12A which faces the upper body of the occupant, as in the bag 18 of the embodiment of Figs. 1 and 2. Also in this embodiment, the deployable body 12A is shaped like an approximately rectangular sheet with a small thickness.

In this system, the rear seat 2 is for three persons. The bag 18A therefore has a lateral width capable of receiving all the three occupants seated side by side in the rear seat 2. Although not shown, also in this embodiment, a front seat disposed ahead of the rear seat 2 includes two seats arranged laterally apart from each other.

This system includes two longitudinal deployable-body deploying inflatable chambers (hereinafter, referred to as longitudinal bags) 44 extending vertically along the left and right side rims of the deployable body 12A. Each longitudinal bag 44 extends from the upper rim of the deployable body 12A toward the lower rim. Also this embodiment includes an oblong bag 26A extending laterally along the lower rim of the deployable body 12A. The lower ends of the longitudinal bags 44 connect to the opposite ends of the oblong bag 26A, respectively.

As shown in Fig. 5, between the oblong bag 26A and the bag 18A, a gas passage 46 that communicates the oblong bag 26A with the lower part of the bag 18A extends vertically along the front surface of the deployable body 12A. The gas passage 46 of this embodiment is provided in two positions that face the space between the central occupant and the left and right occupants of the three occupants seated side by side in the rear seat 2.

As shown in Figs. 4 and 5, the deployable body 12A includes a tubular duct (pipe) 48 passed through the upper rim. The duct 48 is fixed along the ceiling 3 such that it extends in the direction of the vehicle width (laterally). The gas generator 40 is joined with one end of the duct 48 through a duct 50. The duct 50 and the gas generator 40 are fixed along the side rim of the ceiling 3. As shown in Fig. 4, the duct 48 has vent holes 48a each communicating with the upper end of each longitudinal bag 44.

When the gas generator 40 operates to emit a jet of gas, the gas from the gas generator 40 is first introduced into the duct 48 and then introduced into the left and right longitudinal bags 44. The gas communicates from the upper end of the longitudinal bag 44 toward the lower end and flows into the oblong bag 26A communicating with the respective lower ends of the longitudinal bags 44. The gas in the oblong bag 26A thereafter flows into the bag 18A through the gas passages 46.

Also the system has the vent holes 200 for discharging the gas in the inflated bag 18A to the exterior.

As shown in Fig. 3, the vent holes 200 of this embodiment are disposed in the lower center of each of the left and right half of the deployable body 12, which is opposite to the surface of the bag 18 facing the rear-seat occupant, in other words, in the position facing the lower center of the back of the backrest of each seat of the front seat 1, with the deployable body 12A fully deployed, so as not to be closed by the backrest or the headrest of the front seat, the body of the occupant in the rear seat 2 who falls onto the bag 18A, etc. and to prevent the gas flowing out of the vent holes 200 from blowing not only onto the occupant in the rear seat 2 but also onto the occupant in the front seat 1.

The joints 42 are each shaped like an approximately triangular sheet that has three sides, the side (first side) extending along the left or right side of the deployable body 12A, the side (second side) along the left or right side rim of the ceiling 3, and the side (third side) connecting the ends of the first and second sides with each other. The first side of each joint 42 which extends along the side of the deployable body 12A is joined with the side of the deployable body 12A with joint means such as stitching or by integration of the deployable body 12A and the joint 42. A plurality of projections 52 project from the second side of the joint 42 which extends along the side rim of the ceiling 3 for joining the second side with the side rim of the ceiling 3. Each projection 52 has an insertion hole (its reference numeral is omitted) for a bolt etc., through which a bolt etc. is passed to fasten the projection 52 to the side rim of the ceiling 3.

The angle formed by the first side extending along the side of the deployable body 12A and the second side extending along the side rim of the ceiling 3 is an acute angle. The acute angle is preferably within the range from 45 to 80 degrees. The length of the third side that connects the ends of the first side and the second side is approximately equal to that of the second side extending along the side rim of the ceiling 3; however, the third side may be longer than the second side.

The deployable body 12A in an nondeployed state is folded from the lower end toward the upper end into a long and thin folded body extending along the ceiling 3 and covered with a deployable-body cover (not shown) mounted to the ceiling 3. The deployable-body cover has a torn-open portion which is torn open to allow the downward deployment of the deployable body 12A when the deployable body 12A deploys.

Also the joints 42 are folded in a long and thin shape such that they extend along the left and right side rims of the ceiling 3. The side rims of the ceiling 3 each mounts a joint cover (not shown) for covering the folded joints 42. Also the joint cover has a torn-open portion which is torn open to allow the downward deployment of the joint 42 when the joint 42 deploys following the deployment of the deployable body 12A.

The deployable-body cover and the joint cover may be integrated to one or separated.

Since the third side and the second side of the joint 42 in this system are approximately equal in length, as described above, the deployable body 12A can be folded with little deviation from the upper rim to the lower rim along the length of the vehicle when the deployable body 12A is folded. Accordingly, the deployable body 12A can be folded along the length of the vehicle into a relatively compact size. Also when the third side of the joint 42 is longer than the first side, the deviation along the length of the vehicle when the deployable body 12A is folded from the upper rim to the lower rim can be absorbed.

In the occupant protection system 10A constructed above, when a crash sensor (not shown) detects a car crash, the gas generator 40 immediately operates to emit a jet of gas. As described above, the gas from the gas generator 40 is first introduced into the longitudinal bags 44 through the duct 48. The gas communicates from the upper end toward the lower end in the longitudinal bags 44 and so the deployable body 12A inflates from the ceiling 3 downward to expand toward the front of the rear seat 2. With the deployment of the deployable body 12A, the left and right joints 42 also deploy from the ceiling 3 downward.

Since the angle formed by the first side and the second sides of the joint 42 is an acute angle, as described above, the deployable body 12A extends diagonally downward toward the rear of the vehicle along the first side of the joint 42 to cause the oblong bag 26A provided along the lower rim of the deployable body 12A to face the waist of the rear-seat occupant. The oblong bag 26A inflates by introduction of the gas emitted from the gas generator 40 through the longitudinal bags 44 to restrain the waist of the occupant to the rear seat 2, thereby preventing the forward movement of the occupant.

The gas in the oblong bag 26A then flows into the bag 18A through the gas passages 46, so that the bag 18A inflates such that it projects from the front surface of the deployable body 12A toward the occupant seated in the rear seat 2, thereby receiving the occupant.

The left and right sides of the deployable body 12A are joined to the left and right side rims of the ceiling 3 which extend closer to the rear of the vehicle relative to the deployable body 12A, respectively, through the joints 42. Accordingly, even if the occupant in the rear seat 2 falls onto the inflated bag 18A, the deployable body 12A does not retract toward the front of the vehicle, thus being capable of reliably receiving the occupant with the bag 18A. At that time, the gas in the bag 18A flows out through the vent holes 200 to sufficiently relieve the impact at receiving the occupant.

In the occupant protection system 10A, the gas emitted from the gas generator 40 is first introduced into the two longitudinal bags 44, passing through the longitudinal bags 44 and the oblong bag 26A into the bag 18A. The bag 18A therefore starts inflation after the deployable body 12A fully deploys from the ceiling 3 downward with the inflation of the longitudinal bags 44. Accordingly even if the space between the occupant seated in the rear seat 2 and the front seat 1 ahead of the rear seat 2 is small, the deployable body 12A enters the space from above and the bag 18A thereafter inflates to reliably receive the occupant from front.

Since this system is constructed such that the two longitudinal bags 44 inflate with the gas emitted from the gas generator 40 to deploy the deployable body 12A from the ceiling 3 downward, the deployment mechanism of the deployable body 12A can be simplified. In this embodiment, since the gas from the gas generator 40 is introduced to the bag 18A through the longitudinal bags 44 and the oblong bag 26A, the bag 18A and the longitudinal bags 44 can be inflated with the common gas generator 40.

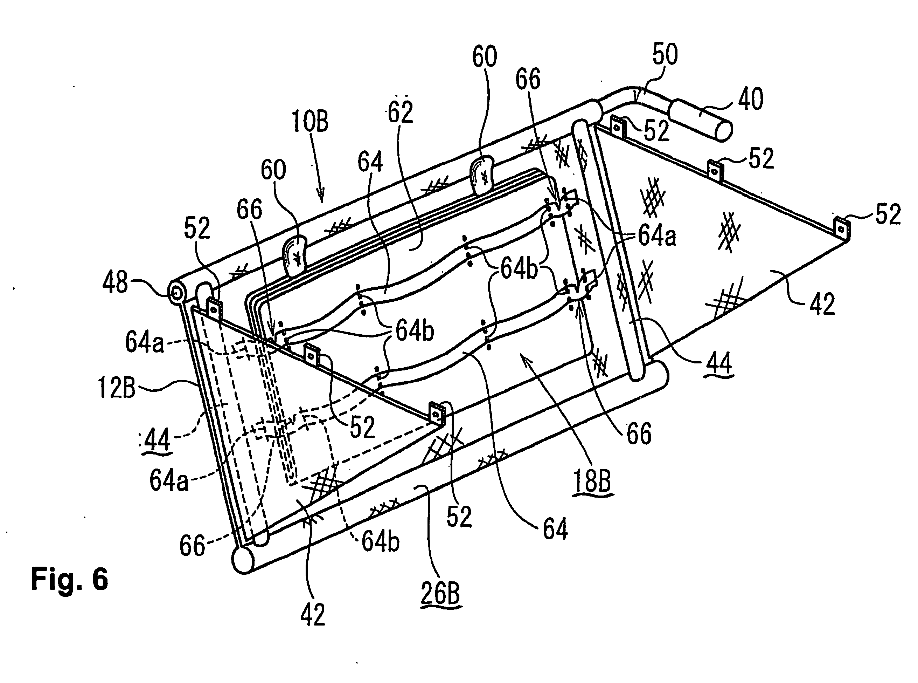

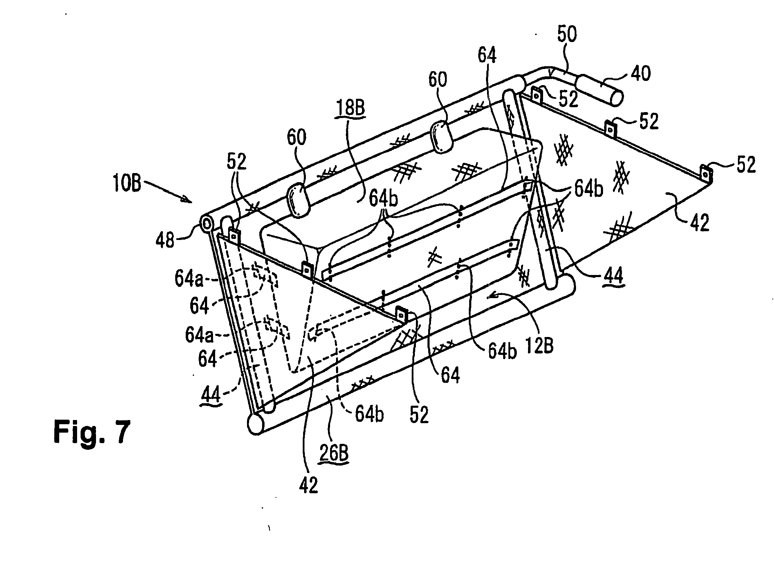

Fig. 6 is a perspective view of an occupant protection system 10B, with the bag in a noninflated state, which is not an embodiment of the present invention. Fig. 7 is a perspective view of the bag 18B of the occupant protection system 10B in an inflated state.

As in the occupant protection system 10A of Figs. 3 to 5, the occupant protection system 10B also includes a deployable body 12B which can deploy from the ceiling 3 (not shown in Figs. 6 and 7) downward such that it deploys vertically and laterally in the vehicle cabin in the region ahead of the upper body of an occupant seated in the rear seat 2 (not shown in Figs. 6 and 7), the gas generator 40, and the two joints 42 connecting the left and right sides of the deployable body 12B with the left and right side rims of the ceiling 3 which are closer to the rear of the vehicle relative the deployable body 12B, respectively. The deployable body 12B mounts a bag 18B which inflates with the gas supplied from the gas generator 40 to receive the occupant. Also the bag 18B inflates so as to protrude from the front surface of the deployable body 12B toward the occupant seated in the rear seat 2 in the region of the deployable body 12B which faces the upper body of the occupant. Also in this embodiment, the deployable body 12B is shaped like an approximately rectangular sheet with a small thickness.

Also the deployable body 12B includes the two longitudinal bags 44 serving as deployable-body deploying inflatable chambers extending vertically along the left and right side rims of the deployable body 12B and an oblong bag 26B extending laterally along the lower rim of the deployable body 12B. The lower ends of the longitudinal bags 44 connect to the opposite ends of the oblong bag 26B. The deployable body 12B includes the tubular duct 48 passed through the upper rim. The gas generator 40 is joined with one end of the duct 48 through the duct 50. The duct 48 has vent holes (not shown) each communicating with the upper end of each longitudinal bag 44. The duct 48 is fixed along the ceiling 3 such that it extends in the direction of the vehicle width.

This system has a gas passage 60 extending between the duct 48 and the bag 18B for introducing the gas that is emitted from the gas generator 40 into the duct 48 into the upper part of the bag 18B. This embodiment has two gas passages 60 apart from each other along the length of the duct 48. The duct 48 has vent holes (not shown) communicating with the gas passages 60.

In this occupant protection system 10B, as shown in Fig. 6, when the gas generator 40 emits no gas, the bag 18B is folded such that a surface 62 opposed to the occupant overlaps the front surface of the deployable body 12B, in a so-called flat state. The occupant-opposing surface 62 is pushed against the front surface of the deployable body 12B with a strap 64 serving as inflation-thickness limitation means for the bag 18B.

The strap 64 is routed laterally along the front surface of the occupant-opposing surface 62 of the bag 18 which is folded into a flat state, opposite ends of which are fixed to the front surface of the deployable body 12B. The intermediate portion of the strap 64 is fixed to the front surface of the occupant-opposing surface 62. Reference numeral 64a denotes a seam that fixes the end of the strap 64 to the front surface of the deployable body 12B. Numeral 64b denotes a seam that fixes the intermediate portion of the strap 64 to the front surface of the occupant-opposing surface 62.

The vicinities of the opposite ends of the strap 64 (the intermediate portion of the adjacent seams 64a and 64b) each have a notch 66 for inducing the strap 64 to be cut when a specified longitudinal tension or more is applied to the strap 64. When the gas from the gas generator 40 is introduced into the bag 18B to bring the gas pressure in the bag 18B into a specified level or more, the strap 64 is cut from the notch 66 to allow the expansion of the occupant-opposing surface 62 toward the occupant.

This system has two straps 64 at vertically different positions.

Although not shown, also in this system, the vent holes 200 for discharging the gas in the inflated bag 18B to the exterior are disposed in positions where they are not closed by the backrest or the headrest of the front seat, the body of the rear-seat occupant who falls onto the bag 18B, etc. and the gas flowing out of the vent holes 200 is not blown not only onto the rear-seat occupant but also onto the front-seat occupant.

The other structure of the occupant protection system 10B is similar to that of the occupant protection system 10A of Figs. 3 to 5. The numerals of Figs. 6 and 7 the same as those of Figs. 3 to 5 indicate the same components.

In the occupant protection system 10B constructed above, when a crash sensor (not shown) detects a car crash, the gas generator 40 immediately operates to emit a jet of gas, as in the occupant protection system 10A. The gas emitted from the gas generator 40 is introduced into the longitudinal bags 44 through the duct 48. As in the deployable body 12A of the occupant protection system 10A, the longitudinal bags 44 inflate from the upper end toward the lower end and so the deployable body 12B inflates from the ceiling 3 downward to expand toward the front of the rear seat 2. With the deployment of the deployable body 12B, the left and right joints 42 also deploy from the ceiling 3 downward. The deployed deployable body 12B is drawn to the part of the joint 42 adjacent to the rear of the vehicle to extend diagonally downward toward the rear of the vehicle and as such, the oblong bag 26B disposed along the lower rim of the deployable body 12B faces the waist of the rear-seat occupant. The oblong bag 26B inflates with the gas flowing through the longitudinal bags 44 to restrain the waist of the occupant, thereby preventing the forward movement of the occupant.

When the jet of gas from the gas generator 40 is introduced into the duct 48, part of the jet gas flows also into the bag 18B through the gas passages 60. The occupant-opposing surface 62 of the bag 18B is, however, restrained to the front surface of the deployable body 12B with the straps 64 to be limited in inflation thickness until the inner gas pressure reaches a predetermined level. Accordingly, even if the space between the occupant seated in the rear seat 2 and the front seat 1 ahead of the rear seat 2 (not shown in Figs. 6 and 7) is narrow, the deployable body 12B can surely enter the space from above.

Subsequently, when the longitudinal bags 44 etc. inflate sufficiently and the gas pressure in the bag 18B has exceeded a specified level, the straps 64 are cut to relieve the limitation of the bag 18B, so that the bag 18B inflates to protrude toward the occupant, thereby receiving the occupant.

Also in this system, the left and right sides of the deployable body 12B are joined with the left and right side rims of the ceiling 3 which extend closer to the rear of the vehicle relative to the deployable body 12B, respectively, with the joint 42. Accordingly, even if the occupant in the rear seat 2 falls onto the inflated bag 18B, the deployable body 12B does not retract toward the front of the vehicle, thus being capable of receiving the occupant reliably with the bag 18B. At that time, the gas in the inflated bag 18B flows out through vent holes (not shown) to sufficiently relieve the impact at receiving the occupant.

In the system of Figs. 6 and 7, an increase in deployment thickness of the bag 18B is limited with the deployment-thickness limitation means (straps 64) until the deployable body 12B sufficiently deploys toward the front of the occupant in the rear seat 2. However, the invention may be constructed such that the inflation of the bag is limited with valve means for checking the flow of gas into the bag until an inflatable body 12C inflates sufficiently, as in an occupant protection system 10C of Fig. 8. Fig. 8 (a) is a perspective view of the occupant protection system 10C with such a structure, with the bag in an inflated state. Fig. 8(b) is a cross-sectional view of the identical part to that of Fig. 8(c), with the bag in a noninflated state. Fig. 8(c) is a cross-sectional view taken along line C-C of Fig. 8(a).

As in the occupant protection system 10B of Figs. 6 and 7, the occupant protection system 10C also includes the deployable body 12C which can deploy from the ceiling 3 downward such that it deploys vertically and laterally in the vehicle cabin in the region ahead of the upper body of an occupant seated in the rear seat 2 (not shown in Fig. 8), the gas generator 40, and the two joints 42 connecting the left and right sides of the deployable body 12C with the left and right sides of the ceiling 3 which are closer to left and right sides of the ceiling 3 which are closer to the rear of the vehicle relative to the deployable body 12C, respectively. The deployable body 12C mounts a bag 18C which inflates with the gas supplied from the gas generator 40 to receive the occupant. Also the bag 18C inflates so as to protrude from the front surface of the deployable body 12C toward the occupant seated in the rear seat 2 in the region of the deployable body 12C which faces the upper body of the occupant. Also in this embodiment, the deployable body 12C is shaped like an approximately rectangular sheet with a small thickness.

Also the deployable body 12C includes the two longitudinal bags 44 serving as longitudinal deployable-body deploying inflatable chambers extending vertically along the left and right side rims of the deployable body 12C and an oblong bag 26C extending laterally along the lower rim of the deployable body 12C. The lower ends of the longitudinal bags 44 connect to the opposite ends of the oblong bag 26C. The deployable body 12C includes the tubular duct 48 passed through the upper rim. The gas generator 40 is joined with one end of the duct 48 through the duct 50. The duct 48 has vent holes (not shown) each communicating with the upper end of each longitudinal bag 44. The duct 48 is fixed along the cabin ceiling 3 such that it extends in the direction of the vehicle width.

A gas passage 70 is provided between the duct 48 and the upper part of the bag 18C for introducing the gas which is emitted from the gas generator 40 into the duct 48 into the bag 18C. The duct 48 has a vent hole 48b communicating with the gas passage 70. In this embodiment, the gas passage 70 extends vertically from the duct 48 to the height that is the vertical intermediate of the bag 18C. A gas supply port 72 is provided at the lower end of the gas passage 70 for supplying gas into the bag 18C. This embodiment has two gas passages 70 apart from each other along the length of the duct 48.

The gas supply port 72 is closed with a closing film 74 serving as valve means, as shown in Fig. 8(b). The closing film 74 is ruptured to open the gas supply port 72, as shown in Fig. 8(c), when the gas pressure of the part upstream from the gas supply port 72 (in the duct 48, the longitudinal bags 44, the oblong bag 26C, and the gas passages 70) exceeds a specified level.

Although not shown, also in this embodiment, the vent holes 200 for discharging the gas in the inflated bag 18C to the exterior are disposed in positions where they are not closed by the backrest or the headrest of the front seat 1, the body of the occupant in the rear seat 2 who falls onto the bag 18C, etc. and the gas flowing out from the vent holes 200 is not blown not only onto the rear-seat occupant but also onto the front-seat occupant.

The other structure of the occupant protection system 10C is similar to that of the occupant protection system 10A of Figs. 3 to 5.

Also in the occupant protection system 10C constructed above, when a crash sensor (not shown) detects a car crash, the gas generator 40 immediately operates to emit a jet of gas, as in the occupant protection system 10A. The gas emitted from the gas generator 40 is introduced into the longitudinal bags 44 through the duct 48. The longitudinal bags 44 inflate from the upper end toward the lower end and so the deployable body 12C inflates from the ceiling 3 downward.

At that time, part of the gas emitted from the gas generator 40 into the duct 48 is introduced also into the gas passages 70. The gas supply ports 72 communicating from the gas passages 70 into the bag 18C, however, are each closed with the closing film 74. Accordingly, the bag 18C is not supplied with gas, not inflating until the longitudinal bags 44 and the oblong bag 26C inflate sufficiently to bring the gas pressure upstream from the gas supply port 72 to a specified level, thereby rupturing the closing film 74; briefly, until the deployable body 12C inflates fully. Accordingly, also in the occupant protection system 10C, even if the space between the occupant seated in the rear seat 2 and the front seat 1 ahead of the rear seat 2 (not shown in Fig. 8) is narrow, the deployable body 12C can surely enter the space from above.

Subsequently, when the longitudinal bags 44 and the oblong bag 26C inflate sufficiently and so the gas pressure upstream from the gas supply port 72 has exceeded a specified level, the closing film 74 is ruptured to open the gas supply port 72, so that the gas flows into the bag 18C through the gas supply port 72. The bag 18C thus inflates to protrude toward the occupant, thereby receiving the occupant. At that time, the gas in the bag 18C flows out from vent holes (not shown) to absorb the impact to the occupant.

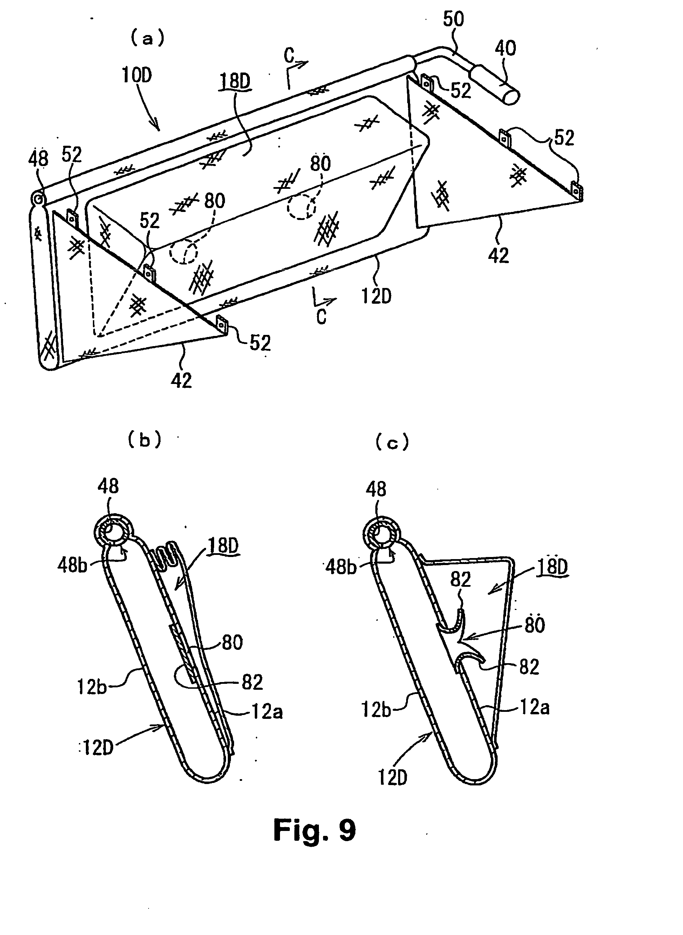

Although the deployable bodies of the foregoing embodiments are shaped like a sheet with a small thickness, the deployable body itself of the invention may be inflatable so as to increase in thickness, as in an occupant protection system 10D of Fig. 9. Fig. 9(a) is a perspective view of the occupant protection system 10D with such a structure, with the bag in an inflated state. Fig. 9(b) is a cross-sectional view of the identical part to that of Fig. 9(c), with the bag in a noninflated state. Fig. 9(c) is a cross-sectional view taken along line C-C of Fig. 9(a).

In the occupant protection system 10D of Fig. 9, the deployable body 12D includes a front panel 12a which faces an occupant seated in the rear seat 2 (not shown in Fig. 9) and a rear panel 12b opposite to the front panel 12a, the outer peripheries of which connect to each other into the form of a flat bag and which can be inflated with the gas supplied to the interior.

Although not shown, the deployable body 12D is limited in thickness with deployment-thickness limitation means to prevent an excess increase in thickness during deployment. Examples of the deployment-thickness limitation means include one with a structure in which the front panel 12a and the rear panel 12b are joined together with a strap etc. in the deployable body 12D and one with a structure in which the front panel 12a and the rear panel 12b are directly joined together by stitching etc.

Also the deployable body 12D of the occupant protection system 10D can deploy from the ceiling 3 (not shown in Fig. 9) downward such that it deploys vertically and laterally in the vehicle cabin in the region ahead of the upper body of an occupant seated in the rear seat 2. The occupant protection system 10D includes the deployable body 12D, the gas generator 40, and the two joints 42 connecting the left and right sides of the deployable body 12D with the left and right sides of the ceiling 3 which are closer to the rear of the vehicle relative to the deployable body 12D, respectively. Also the deployable body 12D of this embodiment mounts a bag 18D which can inflate so as to protrude from the front panel 12a toward the occupant seated in the rear seat 2 by the introduction of gas.

The deployable body 12D of this embodiment also includes the tubular duct 48 passed through the upper rim. The gas generator 40 is joined with one end of the duct 48 through the duct 50. The duct 48 has vent holes 48c communicating with the inner space of the deployable body 12D. The duct 48 of this embodiment is also fixed along the cabin ceiling 3 such that it extends in the direction of the vehicle width.

The front panel 12a of the deployable body 12D has gas supply ports 80 which communicate the deployable body 12D and the bag 18D with each other. Each gas supply port 80 is closed with a closing film 82 serving as valve means, as shown in Fig. 9(b). The closing film 74 is ruptured when the gas pressure in the deployable body 12D exceeds a specified level to open the gas supply port 80, as shown in Fig. 9(c).

The other structure of the occupant protection system 10D is similar to that of the occupant protection system 10A of Figs. 3 to 5.

In the occupant protection system 10D constructed above, when a crash sensor (not shown) detects a car crash, the gas generator 40 immediately operates to emit a jet of gas, as in the occupant protection system 10A. The gas emitted from the gas generator 40 is introduced into the deployable body 12D through the duct 48. The deployable body 12D inflates from the ceiling 3 downward with the gas emitted from the gas generator 40.

At that time, each gas supply ports 80 communicating from the deployable body 12D into the bag 18D, however, is closed with the closing film 82. Accordingly, the bag 18D is not supplied with gas, not inflating until the deployable body 12D inflates sufficiently to bring the gas pressure in the deployable body 12D to a specified level, thereby rupturing the closing films 82; briefly, until the deployable body 12D inflates sufficiently. Accordingly, also in the occupant protection system 10D, even if the space between the occupant seated in the rear seat 2 and the front seat 1 ahead of the rear seat 2 (not shown in Fig. 9) is narrow, the deployable body 12D can surely enter the space from above.

Subsequently, when the deployable body 12D inflates sufficiently and so the gas pressure in the deployable body 12D has exceeded a specified level, the closing films 82 are ruptured to open the gas supply ports 80, so that the gas flows into the bag 18D through the gas supply ports 80. The bag 18D thus inflates to protrude toward the occupant, thereby receiving the occupant.

Since the deployable body 12D of the occupant protection system 10D is also inflated, the reaction force during reception of an occupant is further reduced.

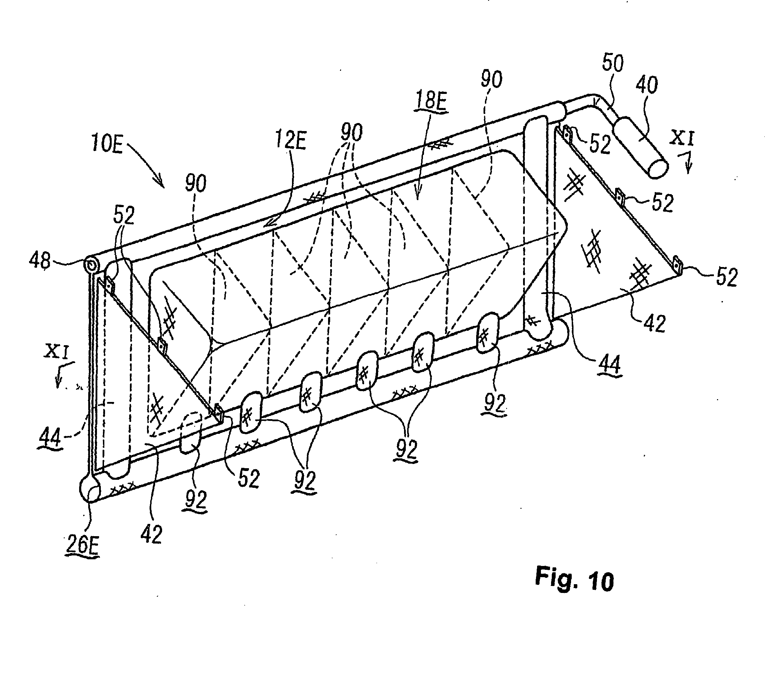

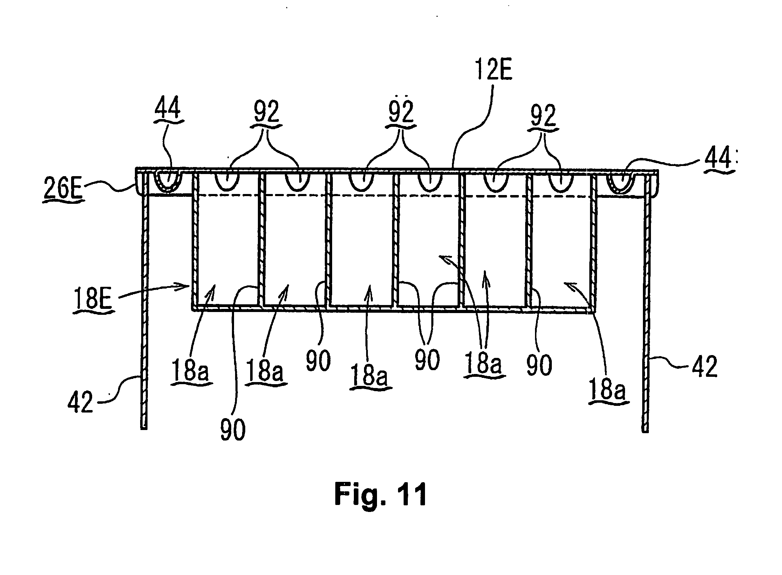

In the invention, the inner space of the bag for receiving the occupant may be divided into multiple chambers as shown in an occupant protection system 10E of Figs. 10 and 11. Fig. 10 is a perspective view of the occupant protection system 10E with such a structure, with the bag in an inflated state. Fig. 11 is a cross-sectional view taken along line XI-XI of Fig. 10.

As in the occupant protection system 10A of Figs. 3 to 5, the occupant protection system 10E includes a deployable body 12E which can deploy from the ceiling 3 downward such that it deploys vertically and laterally in the vehicle cabin in the region ahead of the upper body of an occupant seated in the rear seat 2 (not shown in Figs. 10 and 11), the gas generator 40, and the two joints 42 connecting the left and right sides of the deployable body 12E with the left and right sides of the ceiling 3 which are closer to the rear of the vehicle relative to the deployable body 12E, respectively. The deployable body 12E mounts a bag 18E which inflates with the gas supplied from the gas generator 40 to receive the occupant. Also the bag 18E inflates so as to protrude from the front surface of the deployable body 12E toward the occupant seated in the rear seat 2 in the region of the deployable body 12E which faces the upper body of the occupant. In this system, the deployable body 12E is shaped like an approximately rectangular sheet with a small thickness.

Also the deployable body 12E includes the two longitudinal bags 44 serving as deployable-body deploying inflatable chambers extending vertically along the left and right side rims of the deployable body 12E and an oblong bag 26E extending laterally along the lower rim of the deployable body 12E. The lower ends of the longitudinal bags 44 connect to the opposite ends of the oblong bag 26E. The deployable body 12E includes the tubular duct 48 passed through the upper rim. The gas generator 40 is joined with one end of the duct 48 through the duct 50. The duct 48 has vent holes (not shown) each communicating with the upper end of each longitudinal bag 44. The duct 48 is fixed along the cabin ceiling 3 such that it extends in the direction of the vehicle width.

In this system, the inner space of the bag 18E is divided into a plurality (six in this embodiment) of small chambers 18a arranged along the vehicle width. Numeral 90 denotes a partition panel that partitions the adjacent small chambers 18a. Gas passages 92 that communicate the oblong bag 26E with the small chambers 18a extend vertically along the front surface of the deployable body 12E between the lower part of the bag 18E and the oblong bag 26E.

The other structure of the occupant protection system 10E is similar to that of the occupant protection system 10A of Figs. 3 to 5.

Also inn the occupant protection system 10E constructed above, when a crash sensor (not shown) detects a car crash, the gas generator 40 immediately operates to emit a jet of gas, as in the occupant protection system 10A. The gas emitted from the gas generator 40 is first introduced into the longitudinal bags 44 through the duct 48 and circulates from the upper end toward the lower end in the longitudinal bags 44 and so the deployable body 12E inflates from the ceiling 3 downward to expand toward the front of the rear seat 2.

Subsequently, the gas in the longitudinal bags 44 flows into the oblong bag 26E to inflate it and the gas in the oblong bag 26E flows into the small chambers 18a of the bag 18E through the gas passages 92. Accordingly, the bag 18E inflates so as to protrude from the front surface of the deployable body 12E toward the occupant seated in the rear seat 2, thus receiving the occupant.

Accordingly, also in the occupant protection system 10E, the gas emitted from the gas generator 40 is first introduced into the longitudinal bags 44 and passes through the longitudinal bags 44 and the oblong bag 26E into the small chambers 18a of the bag 18E, as in the occupant protection system 10A. The bag 18E therefore starts inflation after the deployable body 12E inflates from the ceiling 3 sufficiently downward with the expansion of the longitudinal bags 44. Accordingly, even if the space between the occupant seated in the rear seat 2 and the front seat 1 ahead of the rear seat 2 is small, the deployable body 12E can enter the space from above and then the bag 18E inflates to reliably receive the occupant from front.

In the occupant protection system 10E, since the interior of the bag 18E is divided into the multiple small chambers 18a, even if the occupant falls partially onto the bag 18E, the gas in the bag 18E is prevented from flowing out to a portion onto which no occupant falls, so that the bag 18E can firmly receive the occupant.

Although not shown, the invention may have vent holes in the partition panels 90 for communicating the adjacent small chambers 18a with each other, thereby preventing an excess increase in inner pressure only in the small chambers 18a to which the occupant falls.

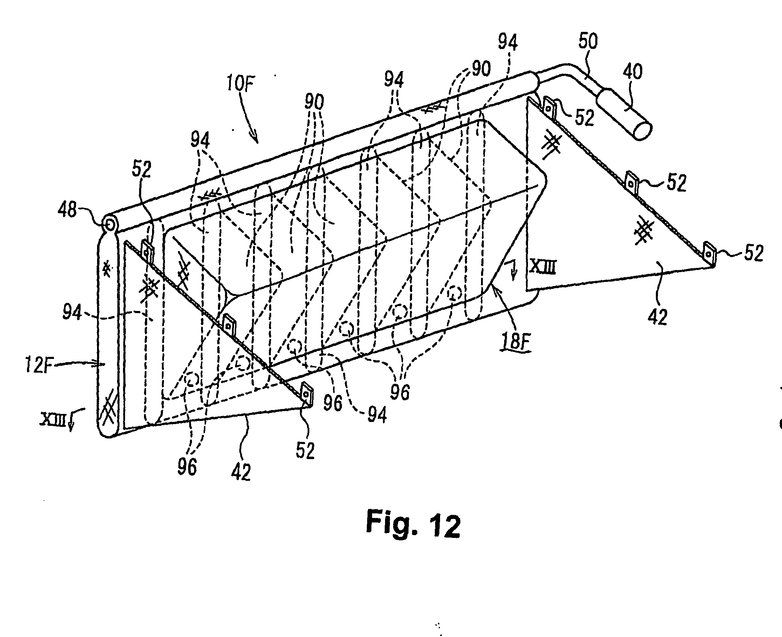

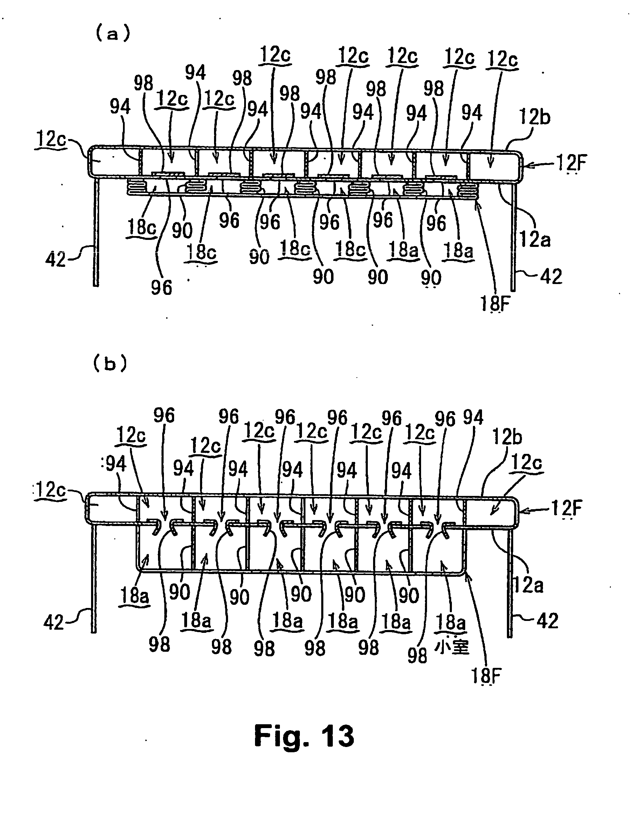

In this invention, when the deployable body itself is formed into a bag that can be inflated by the introduction of gas, the space in the deployable body may also be divided into multiple small chambers, as shown in Figs. 12 and 13. Fig. 12 is a perspective view of an occupant protection system 10F with such a structure with the bag in an inflated state. Fig. 13(a) is a cross-sectional view of the identical part to that of Fig. 13(c) with the bag in a noninflated state. Fig. 13(c) is a cross-sectional view taken along line XIII-XIII of Fig. 12.

In the occupant protection system 10F, a deployable body 12F includes the front panel 12a which faces an occupant seated in the rear seat 2 (not shown in Figs. 12 and 13) and the rear panel 12b, the outer peripheries of which connect to each other into the form of a flat bag, as in the deployable body 12D of the occupant protection system 10D of Fig. 9. In this embodiment, the inner space of the deployable body 12F is divided into multiple (eight in this embodiment) small chambers 12c arranged along the vehicle width. Numeral 94 denotes a partition panel that partitions the adjacent small chambers 12c from each other.

Also the deployable body 12F of this embodiment includes the duct 48 passed through the upper rim, to one end of which the gas generator 40 is connected through the duct 50. The duct 48 has vent holes (not shown) communicating with the small chambers 12c.

The deployable body 12F of this embodiment also includes a bag 18F that can inflate so as to protrude from the front panel 12a toward the occupant by the introduction of gas. The inner space of the bag 18 is divided into multiple (six also in this embodiment) small chambers 18a with the partition panels 90, as in the bag 18E of the occupant protection system 10E of Figs. 10 and 11.

The front panel 12a has gas supply ports 96 that communicate the small chambers 12c of the deployable body 12F with the small chambers 18a of the bag 18F which are adjacent to each other with the front panel 12a held therebetween. As shown in Fig. 13(a), the gas supply ports 96 are each closed with a closing film 98 serving as valve means. The closing film 98 is ruptured to open the gas supply port 96, as shown in Fig. 13(b), when the gas pressure in the small chambers 12c exceeds a specified level.

The other structure of the occupant protection system 10F is similar to that of the occupant protection system 10D of Fig. 9.

Also in the occupant protection system 10F constructed above, when a crash sensor (not shown) detects a car crash, the gas generator 40 immediately operates to emit a jet of gas, as in the occupant protection system 10D. The gas emitted from the gas generator 40 is introduced into the small chambers 12c of the deployable body 12F through the duct 48. The deployable body 12F therefore inflates from the ceiling 3 downward.

At that time, the gas supply ports 96 communicating from the small chambers 12c into the small chambers 18a of the bag 18F, however, are closed with the closing films 98. Accordingly, the small chambers 18a of the bag 18F are not supplied with gas, so that the bag 18F does not inflate, until the small chambers 12c inflate sufficiently to bring the gas pressure in the small chambers 12c to a specified level, thereby rupturing the closing films 98; briefly, until the deployable body 12F inflates sufficiently.

Accordingly, also in the occupant protection system 10F, even if the space between the occupant seated in the rear seat 2 and the front seat 1 ahead of the rear seat 2 (not shown in Figs. 12 and 13) is narrow, the deployable body 12F can surely enter the space from above.

Subsequently, when the deployable body 12F inflates sufficiently and so the gas pressure in the small chambers 12c has exceeded a specified level, the closing films 98 are ruptured to open the gas supply ports 96, so that the gas starts to flow into the small chambers 18a of the bag 18F through the gas supply ports 96. The bag 18F thus inflates to protrude toward the occupant, thereby receiving the occupant.

Also in the occupant protection system 10F, the reaction force during reception of an occupant is further reduced by the inflated deployable body 12F. Since the interior of the deployable body 12F and the interior of the bag 18F are divided into the multiple small chambers 12c and 18a, respectively, even if the occupant falls partially onto the bag 18F, the gas in the bag 18F is prevented from flowing out to a portion onto which no occupant falls or into the deployable body 12F, so that the bag 18F can firmly receive the occupant.

Also in this embodiment, the partition panels 90 and 94 may each have vent holes for communicating the adjacent small chambers 12c and the 18a with each other, respectively.

Although this embodiment is constructed such that all the small chambers 12c of the deployable body 12F are supplied with gas from the common gas generator 40 through the duct 48, the small chambers 12c may each include a gas generator.

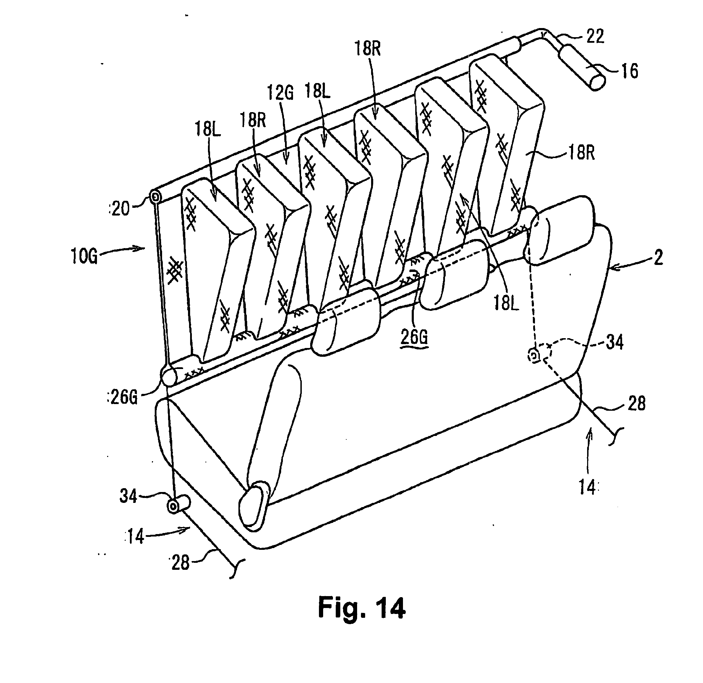

In this invention, the bag for receiving the occupant may be provided for each of occupants seated side by side. Also, the bag may be arranged to receive only a specified part of (for example, shoulders) of the occupant body, as in an occupant protection system 10G of Fig. 14 which is not an embodiment. Fig. 14 is a perspective view of the occupant protection system 10G with such a structure with the bag in an inflated state.

As in the occupant protection system 10 of Figs. 1 and 2, the occupant protection system 10G includes a deployable body 12G which can deploy from the ceiling 3 downward such that it deploys vertically and laterally in the vehicle cabin in the region ahead of the upper body of an occupant seated in the rear seat 2, the draw gear 14 for inflating the deployable body 12G, the gas generator 40, and a controller (not shown) for controlling the operation of the draw gear 14 and the gas generator 40. Of the draw gear 14, Fig. 14 shows only the first wire 28 for drawing the deployable body 12G downward and the moving pulley 34 over which the first wire 28 is looped.

In this system, the rear seat 2 is for three persons. The parts of the deployable body 12G which face the three occupants seated side by side in proper positions of the rear seat 2 each have a pair of left and right bags 18L and 18R which inflate so as to protrude from the front surface of the deployable body 12G toward the occupants to receive the occupant by the introduction of gas from the gas generator 40. The left bag 18L is arranged to receive the left shoulder of the occupant and the right bag 18R is arranged to receive the right shoulder. The bags 18L and 18R are placed apart from each other so that when the bags 18L and 18R have received the occupant's shoulders, the part between the shoulders faces the space between the bags 18L and 18R.

Also in this system, the upper end of the deployable body 12G is joined with the tubular take-up shaft 20, to one end of which the gas generator 40 is connected through a hollow rotational joint and the duct 22. The take-up shaft 20 has vent holes (not shown) communicating with the bags 18L and 18R. The embodiment also has an oblong bag 26G extending laterally along the lower rim of the deployable body 12G. The lower ends of the bags 18L and 18R communicate with the oblong bag 26G.

The other structure of the occupant protection system 10G is similar to that of the occupant protection system 10 of Figs. 1 and 2.

Also in the occupant protection system 10G with such a structure, in a car crash, the controller first activates the rotation driving unit of the first reel 30 (not shown in Fig. 14) of each draw gear 14. The first reel 30 winds the first wire 28, so that the deployable body 12G is pulled from the ceiling 3 downward to deploy toward the front of the rear seat 2. When the deployable body 12G deploys a specified length downward, the controller operates the gas generator 40 to emit a jet of gas.

The gas emitted from the gas generator 40 is introduced into the bags 18L and 18R through the duct 48, so that the bags 18L and 18R inflate so as to protrude toward the occupant, receiving the occupant. At that time, since the left bag 18L receives an occupant's left shoulder, the right bag 18R receives an occupant's right shoulder, and the part between the shoulders face the space between the bags 18L and 18R, the reaction force which is applied at reception to the breastbone and the cervical vertebra which are relatively delicate can be reduced.

Since this system includes the bags 18L and 18R for each occupant, which are arranged to face only the neighborhood of the occupant's shoulders, the total volume of the bags 18L and 18R is so small that the gas generator 40 is enough to have a relatively small output.

Although this system is also constructed such that all the bags 18L and 18R are supplied with gas from the common gas generator 40 through the duct 48, the bags 18L and 18R may each have a gas generator.

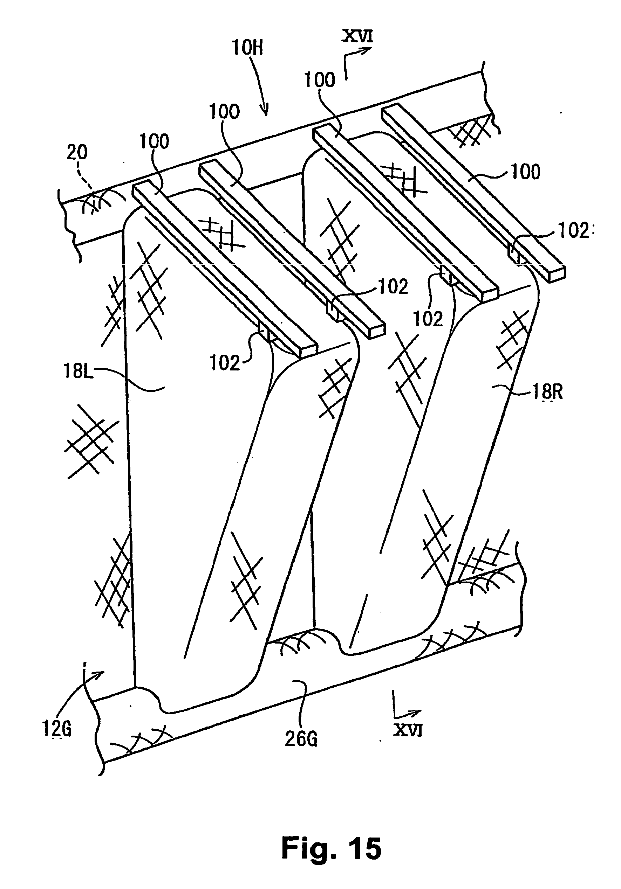

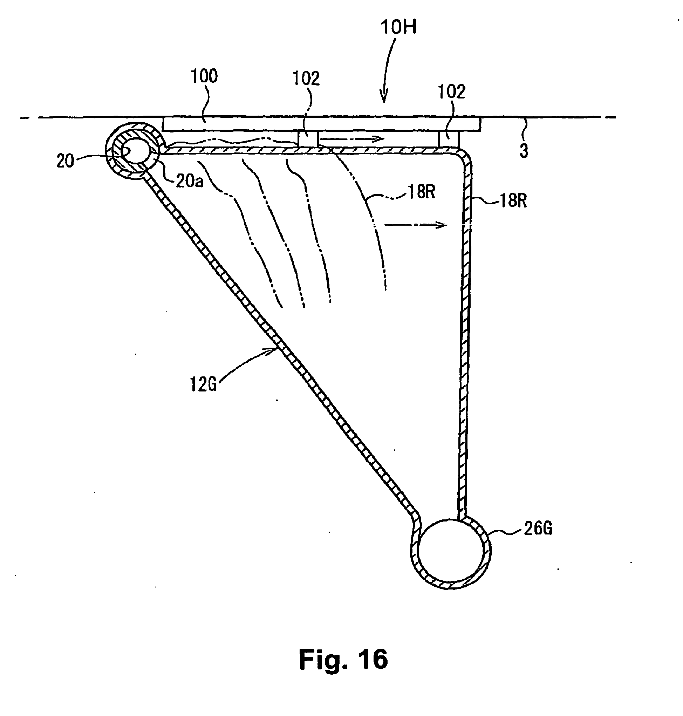

When the deployable body of this system is constructed to deploy from the ceiling of the vehicle cabin downward, the upper part of the bag which inflates from the deployable body adjacent to the occupant may be retained to the ceiling. Such a structure prevents the inflated bag from retracting from the occupant when the occupant strikes against the bag. Fig. 15 is a perspective view of an occupant protection system 10H with such a structure with the bag in an inflated state. Fig. 16 is a cross-sectional view taken along line XVI-XVI of Fig. 15.

As in the occupant protection system 10G of Fig. 14, the occupant protection system 10H includes the deployable body 12G which can deploy from the ceiling 3 downward such that it deploys vertically and laterally in the vehicle cabin in the region ahead of the upper body of an occupant seated in a rear seat (not shown). The parts of the deployable body 12G which face the occupants seated side by side in proper positions of the rear seat each have a pair of left and right bags 18L and 18R which inflate to protrude from the front surface of the deployable body 12G toward the occupant to receive the occupant by the introduction of gas from the gas generator 40.

As described above, the left bag 18L is arranged to receive the left shoulder of the occupant and the right bag 18R is arranged to receive the right shoulder. The bags 18L and 18R are placed apart from each other. When the bags 18L and 18R have received the occupant's shoulders, the part between the shoulders faces the space between the bags 18L and 18R. The system also has the oblong bag 26G extending laterally along the lower rim of the deployable body 12G. The lower ends of the bags 18L and 18R communicate with the oblong bag 26G.

Referring to Fig. 16, the bags 18L and 18R inflate to protrude from the front surface of the deployable body 12G (the surface adjacent to the occupant) toward the occupant (the rear of the vehicle), of which the respective end faces (occupant-opposing surfaces) form approximately vertical surfaces and the upper surfaces extend approximately horizontally along the ceiling 3.

Also in this system, the upper end of the deployable body 12G is joined with the tubular take-up shaft 20, to one end of which a gas generator is connected. The take-up shaft 20 has vent holes 20a communicating with the bags 18L and 18R. The take-up shaft 20 is fixed to the ceiling 3 such that it can rotate around the axis while extending in the direction of the vehicle width along the ceiling 3. The deployable body 12G is wound around the take-up shaft 20 in a nondeployed state. The wound deployable body 12G is covered with a cover (not shown) mounted to the ceiling 3. The cover is constructed to be torn open when the deployable body 12 is deployed, allowing the deployment of the deployable body 12G.

As shown in Fig. 15, this system has a pair of guide rails 100 serving as guide member above the inflated bags 18L and 18R. The guide rails 100 extend from above the base ends of the bags 18L and 18R toward the rear of the vehicle, that is, in the direction of inflation of the bags 18L and 18R, along the ceiling 3. Each guide rail 100 includes a slider 102 serving as a movable body along the length of the guide rail 100. The slider 102 connects to the end (the end adjacent to the occupant) of the upper surface of each of the inflated bags 18L and 18R.

Although not shown, each guide rail 100 has a longitudinal guide groove, in which the slider 102 is fitted slidably. In the system, a saw-tooth section connecting to the extension of the guide groove is provided on the sliding surface of the guide groove to the slider 102. The slider 102 ahs a claw section which can be elastically fitted to the saw-tooth section. The saw-tooth section is constructed to allow the claw section to elastically get over each tooth of the saw-tooth section toward the rear of the vehicle but to prevent the opposite movement by bringing the tooth of the saw-tooth section into contact with the claw section from the front of the vehicle. Briefly, a one-way mechanism is constructed of the saw-tooth section and the claw section which allows the movement of the slider 102 along the guide rail 100 toward the rear of the vehicle but prevents the opposite movement.

The saw-tooth section of this system is constructed such that when a specified load or more is applied from the slider 102 through the claw section, the tooth in contact with the claw section from the front of the vehicle is plastically deformed to be crushed down by the claw section, allowing the movement of the slider 102 toward the front of the vehicle.

When the bags 18L and 18R are in a noninflated state, the slider 102 is located in the vicinity of the end of the guide rail 100 adjacent to the front of the vehicle (above the base ends of the bags 18L and 18R) and the bags 18L and 18R are in a flatly folded state along the front surface of the deployable body 12G. When the deployable body 12G is in a nondeployed state, the guide rail 100 and the slider 102 are covered with a cover (not shown) mounted to the ceiling 3.

The cover has torn-open portions which are torn open by the sliders 102 when the bags 18L and 18R are inflated to move the sliders 102 along the guide rails 100 toward the rear of the vehicle with the inflation of the bags 18L and 18R. The cover may be integrated with the cover that covers the wound deployable body 12G.

The other structure of the occupant protection system 10H is similar to that of the occupant protection system 10G of Fig. 14.

Also in the occupant protection system 10H with such a structure, in the event of a car crash, the deployable body 12G is drawn from the ceiling 3 downward to inflate toward the front of the rear seat. When the deployable body 12G inflates a specified length downward, the gas generator operates to emit a jet of gas. The bags 18L and 18R inflate to protrude toward the occupant with the gas, thus receiving the occupant. At that time, since the left bag 18L receives an occupant's left shoulder, the right bag 18R receives an occupant's right shoulder, and the part between the shoulders faces the space between the bags 18L and 18R, the reaction force applied at reception to breastbone and the cervical vertebra which are relatively delicate can be reduced.

In the occupant protection system 10H, when the bags 18L and 18R are inflated, the sliders 102 move along the guide rails 100 toward the rear of the vehicle with the inflation of the bags 18L and 18R. The bags 18L and 18R are therefore guided by the guide rails 100 through the sliders 102 to surely inflate toward the rear of the vehicle, that is, toward the occupant.

Since the inflated bags 18L and 18R are retained to the ceiling 3 with the sliders 102 and the guide rails 100, the bags 18L and 18R can be retracted from the occupant when the occupant strikes against the bags 18L and 18R. Particularly, since the foregoing one-way mechanism of this system allows the sliders 102 to move in the direction of inflation of the bags 18L and 18R but prevents opposite movement, the backward movement of the bags 18L and 18R can be surely prevented.

As described above, the saw-tooth section of the one-way mechanism is constructed such that when a specified load or more is applied from the slider 102 through the claw section of the slider 102, the tooth in contact with the claw section from the front of the vehicle is plastically deformed to be crushed down by the claw section, allowing the movement of the slider 102 toward the front of the vehicle. Accordingly, when the occupant strikes against the bags 18L and 18R, the sliders 102 retract toward the front of the vehicle while elastically deforming the teeth of the saw-tooth section by the load from the occupant, thereby absorbing the impact applied from the bags 18L and 18R to the occupant.

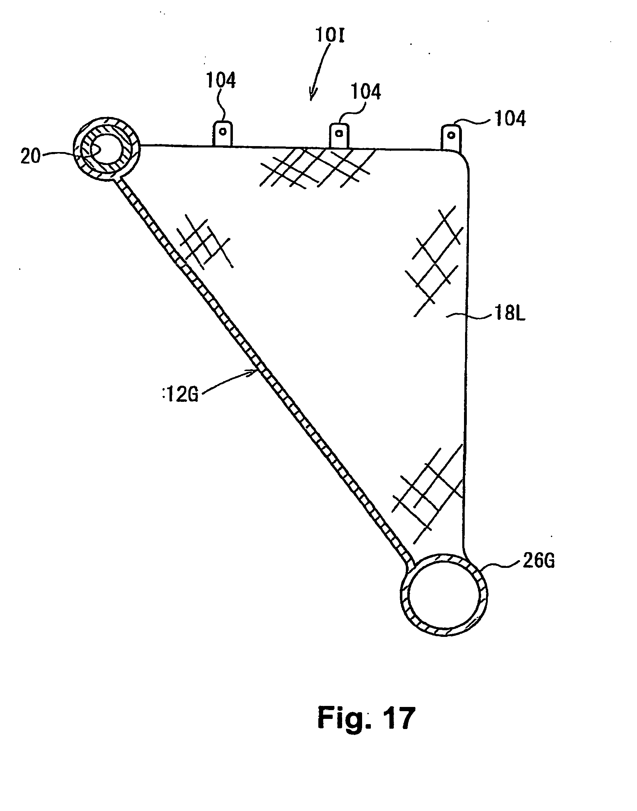

In the invention, the structure in which the upper part of the inflated bag adjacent to the occupant is retained to the ceiling of the vehicle cabin may be other than that of Figs. 15 and 16. The upper part of the inflated bag adjacent to the occupant may be retained directly to the ceiling of the vehicle cabin. Fig. 17 is a cross-sectional view of an occupant protection system 10I with such a structure, viewed from the side.

In the occupant protection system 10I, projections 104 are provided on the upper surface of each of the bags 18L and 18R (only the left bag 18L is shown in Fig. 17) for retaining the bags 18L and 18R to the cabin ceiling (not shown). In this system, the projections 104 are provided at multiple positions (three in this embodiment) from the leading end to the base end in the inflating direction of each of the bags 18L and 18R. Each projection 104 has an insertion hole (its reference numeral is omitted) for a bolt etc., through which a bolt etc. is passed to retain the projection 104 to the cabin ceiling.

The other structure of the occupant protection system 10I is similar to that of the occupant protection system 10G of Fig. 14. The numerals of Fig. 17 the same as those of Fig. 14 indicate the same components.

The occupant protection system 10I can also prevent the bags 18L and 18R from retracting from the occupant when the occupant strikes against the inflated bags 18L and 18R, since the upper surfaces of the bags 18L and 18R are retained to the cabin ceiling with the projections 104.

This system has a simple structure because the upper surfaces of the bags 18L and 18R are retained directly to the cabin ceiling with the projections 104 projecting from the upper surfaces of the bags 18L and 18R.

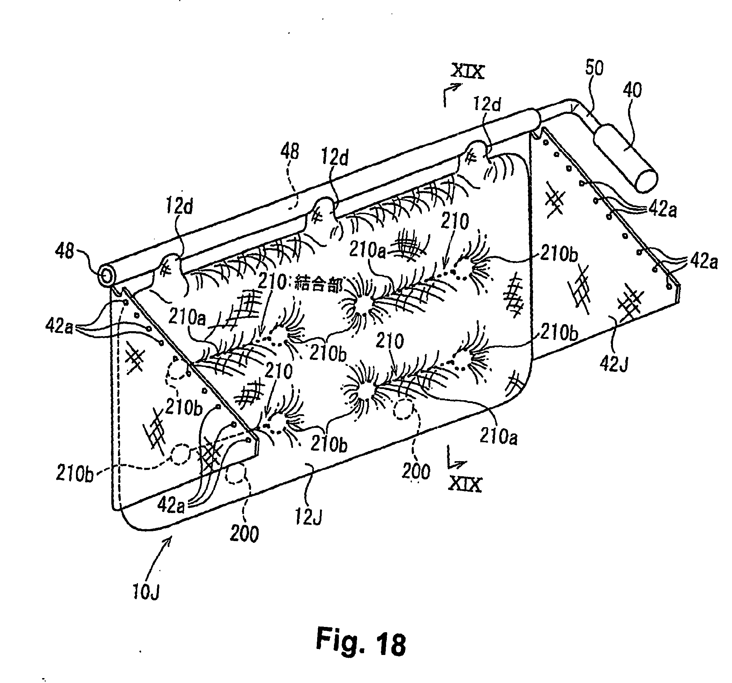

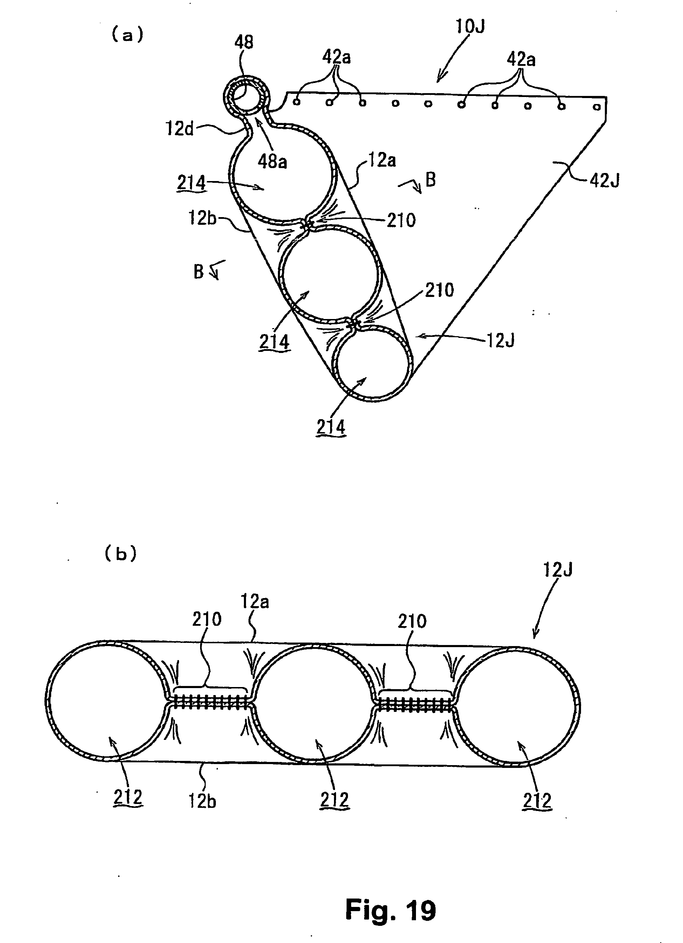

Fig. 18 is a perspective view of an occupant protection system 10J with the deployable body 12 in an inflated state, which is not an embodiment. Fig. 19(a) is a cross-sectional view taken along line XIX-XIX of Fig. 18. Fig. 19(b) is a cross-sectional view taken along line B-B of Fig. 19 (a).

In the occupant protection system 10J, the deployable body 12J includes the front panel 12a which faces an occupant seated in a rear seat (not shown in Figs. 18 and 19) and the rear panel 12b opposite to the front panel 12a, the outer peripheries of which connect to each other into the form of a flat bag and which can be inflated to increase in thickness with the gas supplied to the interior.

Also in this system, the deployable body 12J includes the tubular duct 48 passed through the upper rim. The gas generator 40 is joined to one end of the tubular duct 48 through the duct 50. The gas emitted from the gas generator 40 flows into the deployable body 12J from the vent holes 48a provided in the tubular duct 48 through ducts 12d to inflate the deployable body 12J. The tubular duct 48 is fixed to the cabin ceiling 3 with the long side as the width of the vehicle (in the lateral direction).

In this system, the deployable body 12J inflates while increasing in thickness, deploying toward the front of the rear-seat occupant to receive the rear-seat occupant. Briefly, the system is constructed such that the inflated deployable body 12J serves as a bag.

The rear panel 12b has the vent hole 200 for discharging the gas from the interior of the deployable body 12J to absorb the impact applied to the occupant when the inflated deployable body 12J receives the occupant.

Also in this system, the vent holes 200 are disposed in the lower center of each of the left-half and right-half of the rear panel 12b which constructs the opposite surface from the rear-seat occupant side, as shown in Fig. 18, in other words, in positions where the deployable body 12J faces the lower center of the back of the backrest of each front seat in a fully deployed state so that the vent holes 200 are not closed by the backrest or the headrest of the front seat, the body of the rear-seat occupant who falls onto the deployable body 12J, etc. and the gas flowing out of the vent holes 200 is not blown not only onto the rear-seat occupant but also onto the front-seat occupant.

In this system, the inflation thickness of the deployable body 12J is limited by partially stitching the front panel 12a and the rear panel 12b together. Reference numeral 210 denotes the connecting portion of the front panel 12a with the rear panel 12b.

Specifically, as shown in Fig. 18, two connecting portions 210 are disposed at the same height, in each of the upper and lower lines (four in total). Each connecting portion 210 has a linear connecting portion 210a which connects the front panel 12a and the rear panel 12b laterally and linearly and a pair of circular connecting portions (reinforcing connecting portions) 210b which connect the front panel 12a and the rear panel 12b circularly at opposite ends of the linear connecting portion 210a. The opposite ends of the linear connecting portion 210a each connect to the circular connecting portion 210b.

The connecting portions 210 disposed at the same height have a specified space therebetween and also have a specified space between the opposite ends and the left and right sides of the deployable body 12J. Also between the upper connecting portions 210 and the upper side of the deployable body 12J, between the upper connecting portions 210 and the lower connecting portions 210, and between the lower connecting portions 210 and the lower side of the deployable body 12J are each provided with a specified space.

When the deployable body 12J inflates, as shown in Fig. 19(b), columnar inflatable portions 212 extending vertically and continuously from the upper side to the lower side of the deployable body 12J are formed between the laterally adjacent connecting portions 210 and the opposite ends of each connecting portion 210 and the left and right sides of the deployable body 12J, and as shown in Fig. 19(a), beam-shaped inflatable portions 214 extending laterally and continuously from one side to the other side of the deployable body 12J are formed between the upper side of the deployable body 12J and the upper connecting portions 210, between the upper connecting portions 210 and the lower connecting portions 210, and between the lower connecting portions 210 and the lower side of the deployable body 12J.

Also in this system, the left and right sides of the deployable body 12J connect to the left and right sides of the cabin ceiling (not shown) which extend closer to the rear of the vehicle relative to the deployable body 12J, respectively, with joints 42J. As shown in the drawing, the joint 42J of this system is also shaped like a triangular sheet, of which the front rim connects to the side of the deployable body 12J and the front rim is fixed to the side rim of the cabin ceiling with a fastener (not shown) such as a bolt and a rivet. Reference numeral 42a indicates a hole through which the fastener is passed.

The deployable body 12J of the occupant protection system 10J with such a structure is limited in thickness during inflation because the front panel 12a and the rear panel 12b are joined together with the connecting portions 210. Accordingly, even if the space ahead of the rear-seat occupant is narrow, the deployable body 12J can enter the space to inflate therein.

Since the inflation thickness of the deployable body 12J is limited, the deployable body 12J can inflate quickly. The inflated deployable body 12J becomes tightened by the limitation in inflation thickness, thus firmly receiving the occupant.

Particularly, in this embodiment, when the deployable body 12J inflates, three columnar inflatable portions 212 are formed which extend vertically and continuously from the upper side to the lower side of the deployable body 12J and also three beam-shaped inflatable portions 214 are formed which extend laterally and continuously from one side to the other side of the deployable body 12J, as described above. The inflated and deployed deployable body 12J therefore has high rigidity throughout vertically and laterally, thus preventing buckling.

Since the inflated and deployed deployable body 12J has immunity to buckling, as described above, the retraction of the deployable body 12J toward the front of the vehicle when the occupant falls onto the deployable body 12J is effectively prevented with the joints 42J which connect the left and right sides of the deployable body 12J to the cabin ceiling.

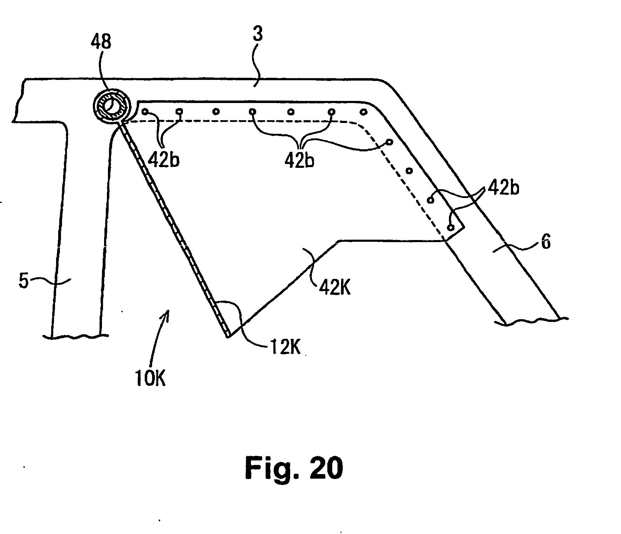

Fig. 20 is a longitudinal sectional view of an occupant protection system 10K, with the deployable body in a deployed state, which is not an embodiment.

Also in the occupant protection system 10K, the deployable body 12K deploys from the ceiling 3 downward. Reference numeral 48 indicates a tubular duct connecting to the upper rim of the deployable body 12K. The tubular duct 48 is disposed between the upper ends of the left and right B-pillars of the vehicle with the long side as the vehicle width (in the lateral direction) and fixed to the cabin ceiling 3.

In this system, the left and right sides of the deployable body 12K are connected to the left and right side rims of the cabin ceiling 3 which extend closer to the rear of the vehicle relative to the tubular duct 48 (B-pillar 5) and to left and right C-pillars 6, respectively, with the joints 42K. As shown in the drawing, each C-pillar 6 is disposed closer to the rear of the vehicle relative to the B-pillar 5 and extends approximately vertically, of which the upper end connects to the rear end of the side rim of the cabin ceiling 3.

The joint 42K of this system is also shaped like a sheet, of which the front rim joins with the side of the deployable body 12K, the upper rim is retained along the side rim of the cabin ceiling 3, and the rear rim is retained along the C-pillar 6. Reference numeral 42b indicates a fastener such as a bolt and a rivet, which retains the upper rim and the rear rim of the joint 42K to the side rim of the cabin ceiling 3 and the C-pillar 6.

In a normal condition, as the deployable body 12K is folded, the joint 42K is folded so as to extend in a long shape along the side rim of the cabin ceiling 3 and the C-pillar 6 connected thereto and is covered with a cover (not shown) mounted to the cabin ceiling 3 and the C-pillar 6.

In emergency such as a car crash, the joints 42K deploy downward along the sides of the vehicle while tearing open the cover as the deployable body 12K deploys downward from the cabin ceiling 3.

In the occupant protection system 10K, the side of the deployable body 12K is connected, with the joint 42K, not only to the side rim of the cabin ceiling 3 which extends closer to the rear of the vehicle relative to the deployable body 12K but also to the C-pillar 6 which connects to the rear end of the side rim and extends approximately vertically. This effectively prevents the deployable body 12K from retracting toward the front of the vehicle when the occupant falls onto the deployed deployable body 12K.

It is to be understood that the above-described embodiments are merely examples of the present invention and the invention is not limited to the embodiments.

For example, the foregoing embodiments are application examples of the invention to an occupant protection system for automobile rear seats. The invention, however, can be applied to any other occupant protection systems for other seats. The occupant protection system of the invention can be applied not only to seats for multiple occupants but also to a seat for one person.

## Claims

1. An occupant protection system (10; 10A-10K), comprising:
a deployable body (12; 12A-12G; 12J; 12K) capable of deploying from above downward in a vehicle cabin into a vertically and laterally deployed state;
a bag (18; 18A-18F; 18L; 18R; 26; 26A-26G) provided to the deployable body (12; 12A-12G; 12J; 12K) and capable of inflating to receive an occupant;
a deploying inflatable chamber (44) for deploying the deployable body (12A; 12B; 12C) by inflation;
a gas generator (16, 40) for inflating the bag (18; 18A-18F; 18L; 18R; 26; 26A-26G);
wherein the bag (18; 18A-18F; 18L, 18R; 26; 26A-26G) inflates to a specified size or more after the deployable body (12; 12A-12G; 12J; 12K) deploys downward by a specified length or more and after the deploying inflatable chamber (44) has inflated,
**characterized in that**
the occupant protection system further comprises gas communicating means (70, 72) for introducing the gas in the deploying inflatable chamber (44) into the bag (18C), the gas generator being provided to supply the deploying inflatable chamber (44) with gas, and **in that**
the gas communicating means (70, 72) comprises valve means (74) that is opened to introduce the gas from the deploying inflatable chamber (44) into the bag (18C) when the gas pressure in the deploying inflatable chamber (44) exceeds a specified value.

2. An occupant protection system (10C) according to claim 1, wherein the lower part of the deploying inflatable chamber (44) and the lower part of the bag (26C) communicate with each other in the lower part of the deploying inflatable chamber (44).

3. An occupant protection system (10B) according to claim 1 or 2, further comprising inflation-thickness limitation means (64) for limiting the inflation thickness of the bag (18B).

4. An occupant protection system (10B) according to any one of the preceding claims, wherein:
the deployable body (12B) deploys with the inflation of the bag (18B); and
the system further comprises inflation-thickness limitation means (64) that limits the inflation thickness of the bag (18B) until the gas pressure in the bag (18B) reaches a specified value and removes the limitation when the gas pressure has reached the specified value.

5. An occupant protection system (10; 10A-10K) according to any one of the preceding claims, wherein the deployable body (12; 12A-12K) deploys from the cabin ceiling (3) downward.

6. An occupant protection system (10A-10F; 10J; 10K) according to claim 5, further comprising joints (42; 42J; 42K) for joining the left and right sides of the deployed deployable body (12A-12F; 12J; 12K) with the left and right side rims of the ceiling (3) which extend to portions closer to the rear of the vehicle relative to the deployable body (12A-12F; 12J; 12K) or the portions connecting thereto, respectively.

7. An occupant protection system (10H; 101) according to claim 5 or 6, further comprising retaining means (100, 102; 104) for retaining the upper part of the inflated bag (18L, 18R) adjacent to the occupant to the cabin ceiling (3).

8. An occupant protection system (104) according to claim 7, wherein the retaining means comprises a guide member (100) extending in the direction of inflation of the bag and a movable body (102) capable of moving along the guide member (100),
wherein the upper part of the bag (18L, 18R) adjacent to the occupant is connected to the movable body (102).

9. An occupant protection system (10H) according to claim 8, wherein the guide member (100) and the movable body (102) comprise one-way means that allows the movable body to move in the direction of inflation of the bag (18L, 18R) and prevents movement in the opposite direction.

10. An occupant protection system (10H) according to claim 9, wherein the one-way means allows the movable body (102) to move in the opposite direction when specified power or more is applied in the opposite direction.

11. An occupant protection system (10; 10A-10K) according to any one of the preceding claims, further comprising a vent hole (200) for discharging gas from the bag.

## Patentansprüche

1. Insassenschutzsystem (10; 10A-10K), umfassend:
einen entfaltbaren Körper (12; 12A-12G; 12J; 12K), welcher in der Lage ist, sich von oberhalb in einer Fahrzeugkabine nach unten in einen vertikal und lateral entfalteten Zustand zu entfalten,
einen Sack (18; 18A-18F; 18L; 18R; 26; 26A-26G), mit welchem der entfaltbare Körper (12; 12A-12G; 12J; 12K) versehen ist und welcher in der Lage ist, sich aufzublasen, um einen Insassen zu empfangen,
eine sich entfaltende aufblasbare Kammer (44), um den entfaltbaren Körper (12A; 12B; 12C) durch Aufblasen zu entfalten,
einen Gasgenerator (16, 40) zum Aufblasen des Sacks (18; 18A-18F; 18L; 18R; 26; 26A-26G),
wobei sich der Sack (18; 18A-18F; 18L; 18R; 26; 26A-26G) zu einer vorgegebenen Größe oder mehr aufbläst, nachdem sich der entfaltbare Körper (12; 12A-12G; 12J; 12K) um eine vorgegebene Länge oder mehr nach unten entfaltet hat und nachdem die sich entfaltende aufblasbare Kammer (44) aufgeblasen hat,
**dadurch gekennzeichnet, dass**
das Insassenschutzsystem weiterhin ein Gasverbindungsmittel (70, 72) zum Einführen des Gases in der sich entfaltenden aufblasbaren Kammer (44) in den Sack (18C) umfasst, wobei der Gasgenerator bereitgestellt ist, um die sich entfaltende aufblasbare Kammer (44) mit Gas zu versorgen, und dass
das Gasverbindungsmittel (70, 72) ein Ventilmittel (74) umfasst, welches geöffnet wird, um das Gas von der sich entfaltenden aufblasbaren Kammer (44) in den Sack (18C) einzuführen, wenn der Gasdruck in der sich entfaltenden aufblasbaren Kammer (44) einen vorgegebenen Wert übertrifft.

2. Insassenschutzsystem (10C) nach Anspruch 1, wobei der untere Teil der sich entfaltenden aufblasbaren Kammer (44) und der untere Teil des Sacks (26C) miteinander bei dem unteren Teil der sich entfaltenden aufblasbaren Kammer (44) in Verbindung stehen.

3. Insassenschutzsystem (10B) nach Anspruch 1 oder 2, weiterhin umfassend ein Aufblasdickenbegrenzungsmittel (64) zum Begrenzen der Aufblasdicke des Sacks (18B).

4. Insassenschutzsystem (10B) nach einem der vorhergehenden Ansprüche, wobei:
sich der entfaltbare Körper (12B) mit dem Aufblasen des Sacks (18B) entfaltet, und
das System weiterhin ein Aufblasdickenbegrenzungsmittel (64) umfasst, welches die Aufblasdicke des Sacks (18B) begrenzt, bis der Gasdruck in dem Sack (18B) einen vorgegebenen Wert erreicht, und welches die Begrenzung entfernt, wenn der Gasdruck den vorgegebenen Wert erreicht hat.

5. Insassenschutzsystem (10; 10A-10K) nach einem der vorhergehenden Ansprüche, wobei sich der entfaltbare Körper (12; 12A-12K) von der Kabinendecke (3) nach unten entfaltet.

6. Insassenschutzsystem (10A-10F; 10J; 10K) nach Anspruch 5, weiterhin umfassend Verbindungsstücke (42; 42J; 42K) zum Verbinden der linken und rechten Seiten des entfalteten entfaltbaren Körpers (12A-12F; 12J; 12K) mit den linken bzw. rechten Seitenrändern der Decke (3), welche sich zu Abschnitten erstrecken, welche näher an der Rückseite des Fahrzeugs relativ zu dem entfaltbaren Körper (12A-12F; 12J; 12K) bzw. den damit verbundenen Abschnitten sind.

7. Insassenschutzsystem (10H; 10I) nach Anspruch 5 oder 6, weiterhin umfassend ein Zurückhaltemittel (100, 102; 104), um den oberen Teil des aufgeblasenen Sacks (18L, 18R) benachbart zu dem Insassen an der Kabinendecke (3) zurückzuhalten.

8. Insassenschutzsystem (104) nach Anspruch 7, wobei das Zurückhaltemittel ein Führungselement (100), welches sich in der Aufblasrichtung des Sacks erstreckt, und einen beweglichen Körper (102), welcher in der Lage ist, sich entlang des Führungselements (100) zu bewegen, umfasst,
wobei der dem Insassen benachbarte obere Teil des Sacks (18L, 18R) mit dem beweglichen Körper (102) verbunden ist.

9. Insassenschutzsystem (10H) nach Anspruch 8, wobei das Führungselement (100) und der bewegliche Körper (102) ein Einwegemittel umfassen, welches es dem beweglichen Körper erlaubt, sich in der Aufblasrichtung des Sacks (18L, 18R) zu bewegen, und Bewegung in der entgegengesetzten Richtung verhindert.

10. Insassenschutzsystem (10H) nach Anspruch 9, wobei es das Einwegemittel dem beweglichen Körper (102) gestattet, sich in die entgegengesetzte Richtung zu bewegen, wenn eine vorgegebene Energie oder mehr in die entgegengesetzte Richtung angewendet wird.

11. Insassenschutzsystem (10; 10A-10K) nach einem der vorhergehenden Ansprüche, weiterhin umfassend ein Lüftungsloch (200) zum Ablassen von Gas aus dem Sack.

## Revendications

1. Système de protection d'occupant (10 ; 10A-10K), comprenant :
- un corps déployable (12 ; 12A-12G ; 12J ; 12K) capable de se déployer à partir de dessus vers le bas dans un habitacle de véhicule dans un état déployé verticalement et latéralement ;
- un coussin (18 ; 18A-18F ; 18L ; 18R ; 26 ; 26A-26G) sur le corps déployable (12 ; 12A-12G ; 12J ; 12K) et capable de se gonfler pour recevoir un occupant ;
- une chambre gonflable de déploiement (44) pour déployer le corps déployable (12A ; 12B ; 12C) par gonflage ;
- un générateur de gaz (16, 40) pour gonfler le coussin (18 ; 18A-18F ; 18L ; 18R ; 26 ; 26A-26G) ,
dans lequel le coussin (18 ; 18A-18-F ; 18L, 18R ; 26 ; 26A-26G) se gonfle jusqu'à une taille spécifiée ou plus après que le déployable (12; 12A-12G ; 12J ; 12K) se déploie vers le bas sur une longueur spécifique ou plus, et après que la chambre gonflable de déploiement (44) se soit gonflée,
**caractérisé en ce que** le système de protection d'occupant comprend en outre des moyens de communication de gaz (70, 72) pour introduire le gaz dans la chambre gonflable de déploiement (44) dans le coussin (18C), le générateur de gaz étant prévu pour alimenter la chambre gonflable de déploiement (44) avec du gaz,
et **en ce que**: les moyens de communication de gaz (70, 72) comprennent des moyens de valve (74) qui sont ouverts pour introduire le gaz provenant de la chambre gonflable de déploiement (44) dans le coussin (18C) lorsque la pression de gaz dans la chambre gonflable de déploiement (44) dépasse une valeur spécifiée.

2. Système de protection d'occupant (10C) selon la revendication 1, dans lequel la partie inférieure de la chambre gonflable de déploiement (44) et la partie inférieure du coussin (26C) communiquent entre elles dans la partie inférieure de la chambre gonflable de déploiement (44)

3. Système de protection d'occupant (10B) selon la revendication 1 ou 2, comprenant en outre des moyens de limite d'épaisseur de gonflage (64) pour limiter l'épaisseur de gonflage du coussin (18B).

4. Système de protection d'occupant (10B) selon l'une quelconque des revendications précédentes, dans lequel :
- le corps déployable (12B) se déploie avec le gonflage du coussin (18B) ; et
- le système comprend en outre des moyens de limite d'épaisseur de gonflage (64) qui limitent l'épaisseur de gonflage du coussin (18B) jusqu'à ce que la pression de gaz dans le coussin (18B) atteigne une valeur spécifique et suppriment la limite lorsque la pression de gaz a atteint la valeur spécifiée.

5. Système de protection d'occupant (10; 10A-10K) selon l'une quelconque des revendications précédentes, dans lequel le corps déployable (12; 12A-12K) se déploie à partir du plafond (3) de l'habitacle vers le bas.

6. Système de protection d'occupant (10A-10F ; 10J-10K) selon la revendication 5, comprenant en outre des joints (42 ; 42J ; 42K) pour assembler les côtés gauche et droit du corps déployable (12A-12F ; 12J; 12K) déployé avec les bords latéraux gauche et droit du plafond (3) qui s'étendent vers des parties plus près de l'arrière du véhicule par rapport au corps déployable (12A-12F ; 12J ; 12K) ou les parties s'y raccordant, respectivement.

7. Système de protection d'occupant (10H ; 10I) selon la revendication 5 ou 6, comprenant en outre des moyens de retenue (100, 102; 104) pour retenir la partie supérieure du coussin gonflé (18L, 18R) adjacente à l'occupant sur le plafond (3) de l'habitacle.

8. Système de protection d'occupant (104) selon la revendication 7, dans lequel les moyens de retenue comprennent un élément de guidage (100) s'étendant dans la direction de gonflage du coussin et un corps mobile (102) capable de se déplacer le long de l'élément de guidage (100),
la partie supérieure du coussin (18L, 18R) adjacente à l'occupant est raccordée au corps mobile (102).

9. Système de protection d'occupant (10H) selon la revendication 8, dans lequel l'élément de guidage (100) et le corps mobile (102) comprennent des moyens unidirectionnels qui permettent au corps mobile de se déplacer dans la direction de gonflage du coussin (18L, 18R) et empêchent le mouvement dans la direction opposée.

10. Système de protection d'occupant (10H) selon la revendication 9, dans lequel les moyens unidirectionnels permettent au corps mobile (102) de se déplacer dans la direction opposée lorsque la puissance spécifique ou plus est appliquée dans la direction opposée.

11. système de protection d'occupant (10 ; 10A-10K) selon l'une quelconque des revendications précédentes, comprenant en outre un trou d'évacuation (200) pour décharger le gaz du coussin.
